(19) Europäisches Patentamt
European Patent Office
Office européen des brevets

(11) **EP 4 742 812 A1**

(12) **EUROPEAN PATENT APPLICATION**
published in accordance with Art. 153(4) EPC

(43) Date of publication:
**13.05.2026 Bulletin 2026/20**

(21) Application number: **24848038.6**

(22) Date of filing: **18.07.2024**

(51) International Patent Classification (IPC):
**H04W 74/08** (2024.01)

(52) Cooperative Patent Classification (CPC):
**H04W 56/00; H04W 74/08; H04W 74/0833**

(86) International application number:
**PCT/CN2024/106206**

(87) International publication number:
**WO 2025/026079 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 CN 202310954541**

(71) Applicant: **Huawei Technologies Co., Ltd.**
**Shenzhen, Guangdong 518129 (CN)**

(72) Inventors:
• **WU, Yuandong**
**Shenzhen, Guangdong 518129 (CN)**
• **GAO, Xinyu**
**Shenzhen, Guangdong 518129 (CN)**
• **LIU, Kunpeng**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57)    A communication method and apparatus are provided, and relate to the field of communication technologies, to improve performance of communication between a terminal device and a first network device via a second network device. The method includes: A second network device receives a first sequence from a first network device, sends a second sequence to the first network device, and receives a timing indication sequence from the first network device. The first sequence is associated with identification information of the second network device, and the first sequence is used for downlink synchronization. The second sequence is associated with the identification information of the second network device. The timing indication sequence indicates a timing advance, and the timing advance is determined by the first network device based on the second sequence.

FIG. 5

## Description

This application claims priority to Chinese Patent Application No. 202310954541.7, filed with the China National Intellectual Property Administration on July 28, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

In a communication system, a terminal device may establish a connection to a network device based on a random access procedure, to communicate with the network device.

Because the terminal device may continuously move in a communication process, when the terminal device moves to a weak coverage area of the network device, or there is no line of sight (line of sight, LOS) path (for example, there is a building or another obstacle) between the terminal device and the network device, quality of a signal received by the terminal device from the network device may be poor, or even the terminal device may fail to receive a signal sent by the network device, affecting communication performance.

Therefore, how to improve performance of communication between the terminal device and the network device becomes a technical problem to be urgently resolved.

## SUMMARY

This application provides a communication method and apparatus, to improve performance of communication between a terminal device and a first network device via a second network device.

According to a first aspect, a communication method is provided. The method may be performed by a second network device, may be performed by a component of the second network device, for example, a processor, a chip, or a chip system of the second network device, or may be implemented by a logical module or software that can implement all or some functions of the second network device. The method includes: receiving a first sequence from a first network device; sending a second sequence to the first network device; and receiving a timing indication sequence from the first network device. The first sequence is associated with identification information of the second network device, and the first sequence is used for downlink synchronization. The second sequence is associated with the identification information of the second network device. The timing indication sequence indicates a timing advance, and the timing advance is determined by the first network device based on the second sequence.

Based on the first aspect, the second network device may implement identity differentiation on the first network device based on the first sequence sent by the first network device, that is, determine the first network device that may be accessed, to implement downlink synchronization. The second network device sends the second sequence to the first network device, so that the first network device can implement identity differentiation on the second network device based on the second sequence, and further determine the timing advance based on the second sequence, and the second network device can implement uplink synchronization based on the timing advance. In this way, the second network device can receive a signal from the first network device, and reflect the signal to a terminal device, or receive a signal from the terminal device, and reflect the signal to the first network device, to improve reliability of communication between the terminal device and the first network device, and improve performance of transmission between the terminal device and the first network device.

In a possible implementation, the first sequence from the first network device is received on a first time-frequency resource, where the first time-frequency resource is a predefined time-frequency resource.

Based on the possible implementation, the second network device receives the first sequence on the predefined first time-frequency resource, so that conflicts generated by occupying a time-frequency resource by the first sequence and another downlink signal in a transmission process can be effectively reduced, and transmission performance can be improved. In addition, the second network device can determine a time-frequency resource for receiving the first sequence, to avoid energy consumption of a full-band detection sequence.

In a possible implementation, a third sequence from the first network device is received, and the second sequence is sent to the first network device on the second time-frequency resource. The third sequence indicates a second time-frequency resource, the third sequence includes a device identifier subsequence and one or more first resource indication subsequences, the device identifier subsequence is associated with the identification information of the second network device, and the first resource indication subsequence is associated with at least one of a predefined time domain resource and a predefined frequency domain resource.

Based on the possible implementation, the second network device sends the second sequence on the second time-frequency resource, so that conflicts generated when the second sequence and another signal occupy a time-frequency resource in a transmission process can be reduced, and transmission performance can be improved. In addition, the first network device can determine a time-frequency resource for receiving the second sequence. If the first network device does not receive the second sequence on the second time-frequency resource, the first network device may notify, by resending the third sequence, the second network device to resend the second sequence, to effectively improve efficiency of information exchange between the first network device and the second network device.

In a possible implementation, the third sequence from the first network device is received on a third time-frequency resource, where the third time-frequency resource is a predefined time-frequency resource.

Based on the possible implementation, the second network device receives the third sequence on the predefined third time-frequency resource, so that conflicts generated by occupying a time-frequency resource by the third sequence and another signal in a transmission process can be effectively reduced, and transmission performance can be improved. In addition, the second network device can determine a time-frequency resource for receiving the third sequence, to avoid energy consumption of a full-band detection sequence.

In a possible implementation, the timing indication sequence further indicates a timing feedback resource. A timing feedback sequence is sent to the first network device on the timing feedback resource, where the timing feedback resource is a predefined time-frequency resource, and the timing feedback sequence indicates that the second network device receives the timing indication sequence.

Based on the possible implementation, the second network device sends the timing feedback sequence on the timing feedback resource, so that conflicts generated by occupying a time-frequency resource by the timing feedback sequence and another signal in a transmission process can be reduced, transmission performance can be improved, and the first network device can determine a time-frequency resource for receiving the timing feedback sequence. In addition, the first network device can determine that the second network device receives the timing indication sequence. If the first network device does not receive the timing feedback sequence from the second network device, the first network device may resend the timing indication sequence to the second network device, to effectively improve efficiency of information exchange between the first network device and the second network device.

In a possible implementation, a weight indication sequence and a fourth sequence that are from the first network device are received, and phase distribution associated with the weight indication sequence is adjusted on a time-frequency resource indicated by the fourth sequence. The weight indication sequence indicates phase distribution of the second network device. The weight indication sequence is associated with the identification information of the second network device. The fourth sequence indicates a fourth time-frequency resource on which the second network device adjusts phase distribution associated with the weight indication sequence. The weight indication sequence includes the device identifier subsequence and one or more weight indication subsequences. The fourth sequence includes the device identifier subsequence and one or more second resource indication subsequences. The device identifier subsequence is associated with the identification information of the second network device. The weight indication subsequence is associated with weight information. The second resource indication subsequence is associated with at least one of a predefined time domain resource and a predefined frequency domain resource.

Based on the possible implementation, the second network device may adjust, based on the weight indication sequence, the phase distribution associated with the weight indication sequence, so that the second network device reflects, to a direction expected by the first network device, a signal sent by the first network device, to improve quality of communication between the terminal device and the first network device. The second network device may determine an effective moment of the weight indication sequence based on the fourth sequence, that is, may adjust, based on the fourth sequence, phase distribution on the fourth time-frequency resource indicated by the first network device.

In a possible implementation, the weight indication sequence and the fourth sequence are located in a same sequence, and the fourth sequence includes the device identifier subsequence, the weight indication subsequence, and the second resource indication subsequence.

Based on the possible implementation, the weight indication sequence and the fourth sequence are located in the same sequence. Therefore, the first network device does not need to separately send the weight indication sequence or the fourth sequence, to effectively reduce resource losses and reduce signaling overheads.

In a possible implementation, any sequence between the first network device and the second network device is associated with the identification information of the second network device.

Based on the possible implementation, the second network device can correctly detect a sequence from a specific first network device by using the identification information of the second network device, so that reliability of communication between the first network device and the second network device can be effectively improved.

In a possible implementation, a fifth sequence is received from the first network device, where the fifth sequence indicates first identification information allocated by the first network device to the second network device.

Based on the possible implementation, the first network device may indicate, to the second network device by using the fifth sequence, the first identification information allocated by the first network device to the second network device. Compared with the identification information of the second network device, a length of a transmitted sequence can be reduced, signaling overheads can be reduced, and resource losses can be reduced.

In a possible implementation, one or more of the following are associated with the first identification information: the third sequence, the fourth sequence, the weight indication sequence, or the device identifier subsequence.

Based on the possible implementation, the second network device can correctly detect the sequence from the specific first network device by using the first identification information, so that reliability of communication between the first network device and the second network device can be effectively improved.

In a possible implementation, a correlation between any two sequences of each sequence type is less than a first preset threshold; or each sequence type includes a plurality of subsequences, and between any two sequences of a same type, a correlation between at least one pair of subsequences with a same start position and a same length is less than a second preset threshold.

Based on the possible implementation, mutual interference caused by sequences in a transmission process can be reduced, transmission performance can be improved, and communication reliability can be effectively improved.

According to a second aspect, a communication method is provided. The method may be performed by a first network device, may be performed by a component of the first network device, for example, a processor, a chip, or a chip system of the first network device, or may be implemented by a logical module or software that can implement all or some functions of the first network device. The method includes: sending a first sequence to a second network device; receiving a second sequence from the second network device; and sending a timing indication sequence to the second network device. The first sequence is associated with identification information of the second network device, and the first sequence is used for downlink synchronization. The second sequence is associated with the identification information of the second network device. The timing indication sequence indicates a timing advance, and the timing advance is determined by the first network device based on the second sequence.

Based on the second aspect, the first network device sends the first sequence to the second network device, so that the second network device can implement identity differentiation on the first network device, that is, the second network device determines the first network device that may be accessed, to implement downlink synchronization. The first network device receives the second sequence from the second network device, so that the first network device can implement identity differentiation on the second network device based on the second sequence, and further determine the timing advance based on the second sequence, and the second network device can implement uplink synchronization based on the timing advance. In this way, the second network device can receive a signal from the first network device, and reflect the signal to a terminal device, or the second network device can receive a signal from the terminal device, and reflect the signal to the first network device, to improve reliability of communication between the terminal device and the first network device, and improve performance of transmission between the terminal device and the first network device.

In a possible implementation, the first sequence is sent to the second network device on a first time-frequency resource, where the first time-frequency resource is a predefined time-frequency resource.

Based on the possible implementation, the first network device sends the first sequence on the predefined first time-frequency resource, so that conflicts generated by occupying a time-frequency resource by the first sequence and another signal in a transmission process can be effectively reduced, and transmission performance can be improved. In addition, the second network device can determine a time-frequency resource for receiving the first sequence, to avoid energy consumption of a full-band detection sequence.

In a possible implementation, a third sequence is sent to the second network device, where the third sequence indicates a second time-frequency resource, the third sequence includes a device identifier subsequence and one or more first resource indication subsequences, the device identifier subsequence is associated with the identification information of the second network device, and the first resource indication subsequence is associated with at least one of a predefined time domain resource and a predefined frequency domain resource.

Based on the possible implementation, the first network device receives the second sequence from the second network device on the second time-frequency resource, so that conflicts generated when the second sequence and another signal occupy a time-frequency resource in a transmission process can be reduced, and transmission performance can be improved. In addition, the first network device can determine a time-frequency resource for receiving the second sequence. If the first network device does not receive the second sequence on the second time-frequency resource, the first network device may notify, by resending the third sequence, the second network device to resend the second sequence, to effectively improve efficiency of information exchange between the first network device and the second network device.

In a possible implementation, the third sequence is sent to the second network device on a third time-frequency resource, where the third time-frequency resource is a predefined time-frequency resource.

Based on the possible implementation, the first network device sends the third sequence on the predefined third time-frequency resource, so that conflicts generated by occupying a time-frequency resource by the third sequence and another signal in a transmission process can be effectively reduced, and transmission performance can be improved. In addition, the second network device can determine a time-frequency resource for receiving the third sequence, to avoid energy consumption of a full-band detection sequence.

In a possible implementation, the timing indication sequence further indicates a timing feedback resource. A timing feedback sequence from the second network device is received on the timing feedback resource, where the timing feedback resource is a predefined time-frequency resource, and the timing feedback sequence indicates that the second network device receives the timing indication sequence.

Based on the possible implementation, the first network device receives the timing feedback sequence from the second network device on the timing feedback resource, so that conflicts generated by occupying a time-frequency resource by the timing feedback sequence and another signal in a transmission process can be reduced, transmission performance can be improved, and the first network device can determine a time-frequency resource for receiving the timing feedback sequence. In addition, the first network device can determine that the second network device receives the timing advance. If the first network device does not receive the timing feedback sequence from the second network device, the first network device may resend the timing indication sequence to the second network device, to effectively improve efficiency of information exchange between the first network device and the second network device.

In a possible implementation, the weight indication sequence and the fourth sequence are sent to the second network device, where the weight indication sequence indicates phase distribution of the second network device, the weight indication sequence is associated with the identification information of the second network device, and the fourth sequence indicates a fourth time-frequency resource on which the second network device adjusts phase distribution associated with the weight indication sequence.

Based on the possible implementation, the first network device sends the weight indication sequence to the second network device, so that the second network device can adjust, based on the weight indication sequence, the phase distribution associated with the weight indication sequence, and the second network device reflects a signal sent by the first network device to a direction expected by the first network device, to improve quality of communication between the terminal device and the first network device. The second network device can determine, based on the fourth sequence, an effective moment of the weight indication sequence, that is, the second network device can adjust, based on the fourth sequence, phase distribution on the fourth time-frequency resource indicated by the first network device. The weight indication sequence includes the device identifier subsequence and one or more weight indication subsequences. The fourth sequence includes the device identifier subsequence and one or more second resource indication subsequences. The device identifier subsequence is associated with the identification information of the second network device. The weight indication subsequence is associated with weight information. The second resource indication subsequence is associated with at least one of a predefined time domain resource and a predefined frequency domain resource.

In a possible implementation, the weight indication sequence and the fourth sequence are located in a same sequence, and the fourth sequence includes the device identifier subsequence, the weight indication subsequence, and the second resource indication subsequence.

Based on the possible implementation, the weight indication sequence and the fourth sequence are located in the same sequence. Therefore, the first network device may not need to separately send the weight indication sequence or the fourth sequence, to effectively reduce resource losses and reduce signaling overheads.

In a possible implementation, any sequence between the first network device and the second network device is associated with the identification information of the second network device.

Based on the possible implementation, the second network device can correctly detect a sequence from a specific first network device by using the identification information of the second network device, so that reliability of communication between the first network device and the second network device can be effectively improved.

In a possible implementation, a fifth sequence is sent to the second network device, where the fifth sequence indicates first identification information allocated by the first network device to the second network device.

Based on the possible implementation, the first network device may indicate, to the second network device by using the fifth sequence, the first identification information allocated by the first network device to the second network device. Compared with the identification information of the second network device, a length of a transmitted sequence can be reduced, signaling overheads can be reduced, and resource losses can be reduced.

In a possible implementation, between the first network device and the second network device, the third sequence, the fourth sequence, and the weight indication sequence are associated with the first identification information of the second network device.

Based on the possible implementation, the second network device can correctly detect the sequence from the specific first network device by using the first identification information, so that reliability of communication between the first network device and the second network device can be effectively improved.

In a possible implementation, a correlation between any two sequences of each sequence type is less than a first preset threshold; or each sequence type includes a plurality of subsequences, and between any two sequences of a same type, a correlation between at least one pair of subsequences with a same start position and a same length is less than a second preset threshold.

Based on the possible implementation, mutual interference caused by sequences in a transmission process can be reduced, transmission performance can be improved, and communication reliability can be effectively improved.

According to a third aspect, a communication apparatus is provided, to implement the communication method in the first aspect. The communication apparatus may be the second network device in the first aspect, or an apparatus or a component, for example, a chip, included in the second network device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the first aspect and the possible implementations of the first aspect. The processing module may be configured to implement a processing function in any one of the first aspect and the possible implementations of the first aspect. For example, the transceiver module is configured to receive a first sequence from a first network device, where the first sequence is associated with identification information of the second network device, and the first sequence is used for downlink synchronization. The transceiver module is further configured to send a second sequence to the first network device, where the second sequence is associated with the identification information of the second network device. The transceiver module is further configured to receive a timing indication sequence from the first network device, where the timing indication sequence indicates a timing advance, and the timing advance is determined by the first network device based on the second sequence.

Optionally, the transceiver module and the processing module of the communication apparatus in the third aspect may further perform corresponding functions in any possible implementations of the first aspect. For details, refer to the detailed descriptions in the method examples. For beneficial effects that can be achieved, refer to the foregoing related content.

According to a fourth aspect, a communication apparatus is provided, to implement the communication method in the second aspect. The communication apparatus may be the first network device in the second aspect, or an apparatus or a component, for example, a chip, included in the first network device.

The communication apparatus includes a corresponding module, unit, or means for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the second aspect and the possible implementations of the second aspect. The processing module may be configured to implement a processing function in any one of the second aspect and the possible implementations of the second aspect. For example, the transceiver module is configured to send a first sequence to a second network device, where the first sequence is associated with identification information of the second network device, and the first sequence is used for downlink synchronization. The transceiver module is further configured to receive a second sequence from the second network device, where the second sequence is associated with the identification information of the second network device. The transceiver module is further configured to send a timing indication sequence to the second network device, where the timing indication sequence indicates a timing advance, and the timing advance is determined by the first network device based on the second sequence.

Optionally, the transceiver module and the processing module of the communication apparatus in the fourth aspect may further perform corresponding functions in any possible implementations of the second aspect. For details, refer to the detailed descriptions in the method examples. For beneficial effects that can be achieved, refer to the foregoing related content.

According to a fifth aspect, a communication apparatus is provided, including at least one processor. The processor is configured to cause, by executing computer instructions stored in a memory or by using a logical circuit, the communication apparatus to perform the communication method according to any one of the foregoing aspects or the possible implementations of any one of the foregoing aspects. The communication apparatus may be the second network device in any one of the first aspect or the possible implementations of the first aspect, or an apparatus or a component, for example, a chip, included in the second network device. Alternatively, the communication apparatus may be the first network device in any one of the second aspect or the possible implementations of the second aspect, or an apparatus or a component, for example, a chip, included in the first network device.

In some possible implementations, the communication apparatus further includes a memory, configured to store computer instructions and/or a configuration file of the logic circuit. Optionally, the memory and the processor are integrated together, or the memory is independent of the processor.

According to a sixth aspect, a communication apparatus is provided, including a processor and a communication interface. The communication interface is configured to input a signal and/or output a signal. The processor is configured to execute a computer program or instructions, to cause the communication apparatus to perform the communication method in any one of the foregoing aspects. The communication apparatus may be the second network device in any one of the first aspect or the possible implementations of the first aspect, or an apparatus or a component, for example, a chip, included in the second network device. Alternatively, the communication apparatus may be the first network device in any one of the second aspect or the possible implementations of the second aspect, or an apparatus or a component, for example, a chip, included in the first network device.

In some possible implementations, the communication interface is an interface circuit, and is configured to read and write computer instructions. For example, the interface circuit is configured to receive computer-executable instructions (where the computer-executable instructions are stored in a memory, and may be directly read from the memory, or may be read via another component), and transmit the computer-executable instructions to the processor.

In some possible implementations, the communication interface is configured to communicate with a module outside the communication apparatus.

In some possible implementations, the communication apparatus may be a chip or a chip system. When the apparatus is the chip system, the chip system may include a chip, or may include a chip and another discrete component.

According to a seventh aspect, a communication apparatus is provided, including a logic circuit and an interface circuit. The interface circuit is configured to input information and/or output information. The logic circuit is configured to perform the communication method in any one of the foregoing aspects, and perform processing and/or generate to-be-output information based on the input information. The communication apparatus may be the second network device in any one of the first aspect or the possible implementations of the first aspect, or an apparatus or a component, for example, a chip, included in the second network device. Alternatively, the communication apparatus may be the first network device in any one of the second aspect or the possible implementations of the second aspect, or an apparatus or a component, for example, a chip, included in the first network device.

According to an eighth aspect, a computer-readable storage medium is provided. The computer-readable storage medium stores a computer program or instructions. When the computer program or the instructions are executed by a processor, the communication method in any one of the foregoing aspects is caused to be performed.

According to a ninth aspect, a computer program product is provided. When the computer program product is executed by a processor, the communication method in any one of the foregoing aspects is caused to be performed.

It may be understood that when the communication apparatus provided in any one of the third aspect to the seventh aspect is a chip, the foregoing sending action/function may be understood as outputting information, and the foregoing receiving action/function may be understood as inputting information.

For technical effects brought by any one of the third aspect to the ninth aspect, refer to the technical effects brought in any one of the first aspect or the possible implementations of the first aspect, or refer to the technical effects brought in any one of the second aspect or the possible implementations of the second aspect. Details are not described herein again.

According to a tenth aspect, a communication system is provided. The communication system includes the second network device in any one of the first aspect or the possible implementations of the first aspect and the first network device in any one of the second aspect or the possible implementations of the second aspect.

**BRIEF DESCRIPTION OF DRAWINGS**

FIG. 1 is an interaction diagram of random access according to an embodiment of this application;
FIG. 2 is a diagram of a communication system according to an embodiment of this application;
FIG. 3 is a diagram of another communication system according to an embodiment of this application;
FIG. 4 is a diagram of a communication apparatus according to an embodiment of this application;
FIG. 5 is an interaction diagram of a communication method according to an embodiment of this application;
FIG. 6 is an interaction diagram of a communication method according to an embodiment of this application;
FIG. 7 is an interaction diagram of sequence generation according to an embodiment of this application;
FIG. 8 is an interaction diagram of a communication method according to an embodiment of this application;
FIG. 9 is a diagram of delivering weight information according to an embodiment of this application;
FIG. 10 is a diagram of a structure of a second network device according to an embodiment of this application;
FIG. 11 is a diagram of a structure of a first network device according to an embodiment of this application; and
FIG. 12 is a diagram of a structure of a communication apparatus according to an embodiment of this application.

## DESCRIPTION OF EMBODIMENTS

The following describes implementations of embodiments of this application in detail with reference to accompanying drawings in this specification.

In the descriptions of this application, unless otherwise specified, "/" indicates that associated objects are in an "or" relationship. For example, A/B may indicate A or B. In this application, "and/or" merely describes an association relationship between associated objects and indicates that three relationships may exist. For example, A and/or B may indicate three cases: Only A exists, both A and B exist, and only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, various embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatuses provided in embodiments of this application may also correspondingly implement these features or functions. Details are not described herein.

In this application, unless otherwise specified, mutual reference may be made between same or similar parts of various embodiments. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding of the technical solutions in embodiments of this application, the following first briefly describes technologies related to this application.

Random access (random access): When a terminal device communicates with a first network device, the terminal device may access the first network device in a random access manner.

Optionally, the first network device may periodically send a synchronization signal and physical broadcast channel block (synchronization signal and physical broadcast channel block, SSB) to the terminal device.

The SSB may include a primary synchronization signal (primary synchronization signal, PSS), a secondary synchronization signal (secondary synchronization signal, SSS), and a physical broadcast channel (physical broadcast channel, PBCH).

The PBCH includes a master information block (master information block, MIB) and information associated with transmission time of another SSB.

Optionally, when detecting the SSB, the terminal device may complete downlink synchronization and cell search based on the PSS and the SSS. Further, the terminal device may obtain a system information block 1 (system information block 1, SIB1) based on the MIB, and initiate random access (also referred to as initial access) to the first network device based on the SIB1.

The SIB1 carries a cell selection parameter, an access control parameter, a channel configuration related to initial access to a network, and other information.

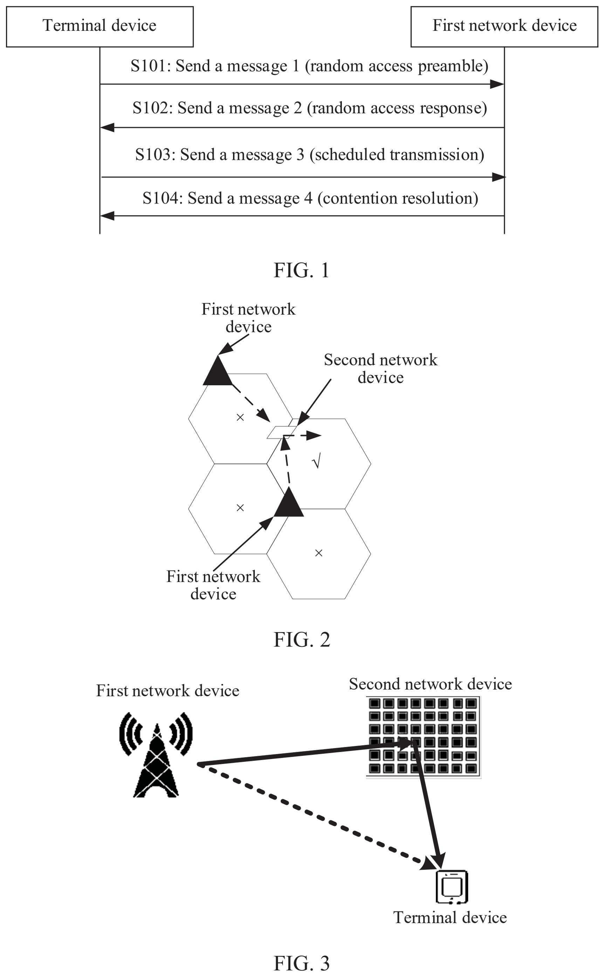

For example, when a plurality of terminal devices simultaneously detect the SSB from the first network device and send an access request, the terminal device may access the first network device based on a procedure shown in FIG. 1 below. Specific steps are as follows.

S101: The terminal device sends a message 1 (message 1, Msg1) to the first network device. Correspondingly, the first network device receives the Msg1 from the terminal device.

Optionally, the Msg1 may include a random access preamble (random access preamble).

The random access preamble indicates that the terminal device requests to access the first network device.

Optionally, the first network device may calculate an uplink timing advance (timing advance, TA) based on the random access preamble.

S102: The first network device sends a message 2 (message 2, Msg2) to the terminal device. Correspondingly, the terminal device receives the Msg2 from the first network device.

Optionally, the Msg2 may include a random access response (random access response).

The random access response is used to respond to the random access preamble.

Optionally, the first network device sends the TA to the terminal device. Correspondingly, the terminal device receives the TA from the first network device.

The TA may be carried in the Msg2.

Optionally, the terminal device may complete uplink synchronization based on the TA.

S103: The terminal device sends a message 3 (message 3, Msg3) to the first network device. Correspondingly, the first network device receives the Msg3 from the terminal device.

Optionally, the Msg3 may include scheduled transmission (scheduled transmission).

The scheduled transmission may carry a unique identification code of the terminal device, and is used by the first network device to distinguish between different terminal devices that perform contention-based access.

Optionally, the terminal device may establish a radio resource control (radio resource control, RRC) connection through the scheduled transmission.

Optionally, the Msg3 may carry an RRC link establishment message, or may carry an RRC connection reestablishment message. This is not limited.

S104: The first network device sends a message 4 (message 4, Msg4) to the terminal device. Correspondingly, the terminal device receives the Msg4 from the first network device.

Optionally, the Msg4 may include a media access control-packet data unit (media access control-packet data unit, MAC-PDU).

The MAC-PDU may carry a temporary cell-radio network temporary identifier (temporary community-radio network temporary identifier, TC-RNTI) or a contention resolution identifier (contention resolution identifier).

Optionally, the terminal device may determine, by using a TC-RNTI (or by monitoring a contention resolution identifier of the terminal device), whether the terminal device successfully contends for accessing the first network device.

Based on the foregoing descriptions of accessing the first network device by the terminal device, the Msg1 sent by the terminal device may be generated based on the SSB, that is, different SSBs are associated with different random access preambles.

For example, the terminal device may select one of the received SSBs based on reference signal received power (reference signal received power, RSRP) of the SSBs, and access the first network device associated with the SSB. In other words, the terminal device uses strength of the SSB sent by the first network device as a standard for accessing the first network device.

For example, in an example in which the terminal device is in a moving process, the terminal device may selectively access the first network device based on signal quality of the SSB of the first network device, and does not fixedly access a specific first network device.

Because the terminal device may continuously move in a communication process, when the terminal device moves to a weak coverage area of the first network device, or there is no LOS path (for example, there is a building or another obstacle) between the terminal device and the first network device, quality of a signal received by the terminal device from the first network device may be poor, or even the terminal device may fail to receive a signal sent by the first network device, affecting communication performance.

To resolve this problem, it is proposed that a second network device may be deployed in a coverage area of the first network device, and signal reflection between the terminal device and the first network device is implemented via the second network device (that is, the first network device sends a signal that is to be sent to the terminal device to the second network device, and the second network device reflects the signal from the first network device to the terminal device, so that the terminal device receives the signal from the first network device; or the terminal device sends a signal that is to be sent to the first network device to the second network device, and the second network device reflects the signal from the terminal device to the first network device, so that the first network device receives the signal from the terminal device). Therefore, quality of communication between the terminal device and the first network device is improved, and performance of transmission between the terminal device and the first network device is improved.

The second network device may be a low-cost first network device. To ensure that the signal sent by the first network device to the second network device is incident from a front side of the second network device, a deployment location, a panel boresight direction, an accessed first network device, and/or the like of the second network device are/is all determined through network planning. As shown in FIG. 2 below, the second network device may access, through network planning, a first network device associated with an area that is marked as"√".

Based on positioning of the second network device, the second network device has a few functions of processing information received from the first network device. For example, the second network device may implement only basic functions such as sequence detection and sending, and RSRP detection and reporting. The terminal device may select, based on signal strength of the first network device and in a random access manner, a first network device with high access signal strength. However, the second network device cannot identify the SSB like the terminal device, and the second network device needs to access a specific first network device. Therefore, the second network device cannot access the first network device in the random access manner.

Therefore, how the second network device accesses a specific first network device to improve performance of communication between the terminal device and the first network device becomes an urgent technical problem to be resolved.

To resolve the foregoing problem, this application provides a communication method. In the method, a second network device receives a first sequence from a first network device, sends a second sequence to the first network device, and receives a timing indication sequence from the first network device. The first sequence is associated with identification information of the second network device, and the first sequence is used for downlink synchronization. The second sequence is associated with the identification information of the second network device. The timing indication sequence indicates a timing advance, and the timing advance is determined by the first network device based on the second sequence.

In this embodiment of this application, the second network device may implement identity differentiation on the first network device based on the first sequence sent by the first network device, that is, determine the first network device that may be accessed, to implement downlink synchronization. The second network device sends the second sequence to the first network device, so that the first network device can implement identity differentiation on the second network device based on the second sequence, and further determine the timing advance based on the second sequence, and the second network device can implement uplink synchronization based on the timing advance. In this way, the second network device can receive a signal from the first network device, and forward the signal to a terminal device; or receive a signal from the terminal device, and forward the signal to the first network device, to improve reliability of communication between the terminal device and the first network device, and improve performance of transmission between the terminal device and the first network device.

The following describes implementations of embodiments of this application in detail with reference to accompanying drawings in this specification.

The technical solutions in embodiments of this application may be applied to various communication systems. The communication system may be a 3rd generation partnership project (3rd generation partnership project, 3GPP) communication system, for example, a 4th generation (4th generation, 4G) mobile communication system, long term evolution (long term evolution, LTE), a 5th generation (5th generation, 5G) mobile communication system, an NR, a system in which LTE and 5G hybrid networking is used, a non-terrestrial communication network (non-terrestrial network, NTN) system, a 6th generation (6th generation, 6G) mobile communication system or another evolved mobile communication system after 5G, a vehicle-to-everything (vehicle-to-everything, V2X) system, a device-to-device (device-to-device, D2D) communication system, a machine-to-machine (machine-to-machine, M2M) communication system, an internet of things (internet of things, IoT), a narrowband-internet of things (narrowband-internet of things, NB-IoT), another next-generation communication system, an integrated sensing communication system, a satellite communication system, or the like. The communication system may alternatively be a non-3GPP communication system, for example, a wireless local area network (wireless local area network, WLAN) system such as a wireless fidelity (wireless fidelity, Wi-Fi). This is not limited.

This application may be applied to various communication scenarios, such as uplink synchronization, downlink synchronization, channel estimation, and signal detection.

The foregoing communication systems and communication scenarios to which this application is applicable are merely examples for description, communication systems and communication scenarios to which this application is applicable are not limited thereto, and the foregoing descriptions do not constitute any limitation on the solutions of this application.

For example, a communication system shown in FIG. 3 is used as an example. The communication system in this embodiment of this application may include a first network device, a second network device, and a terminal device.

The first network device in embodiments of this application may be any device that is deployed in an access network and that can perform wireless communication with the second network device and/or the terminal device, or may be a chip or a chip system that may be disposed in the foregoing device, or may be a logical node or a logical module or a function implemented in a software manner. The first network device may be configured to implement functions such as a radio physical control function, resource scheduling and radio resource management, radio access control, and mobility management. Specifically, the first network device may be a device supporting wired access, or may be a device supporting wireless access.

Optionally, the first network device in embodiments of this application is a device that connects the second network device and/or the terminal device to a wireless network. The first network device may be a node in a radio access network (radio access network, RAN), or may be a base station, and may be referred to as a radio access network node (or device).

For example, the first network device may include a base transceiver station (base transceiver station, BTS) in a global system for mobile communication (global system for mobile communication, GSM) or code division multiple access (code division multiple access, CDMA) network. Alternatively, the first network device may include a NodeB in a wideband code division multiple access (wideband code division multiple access, WCDMA) network. Alternatively, the first network device may include an evolved NodeB (NodeB or eNB or e-NodeB, evolved NodeB) in an LTE system or an LTE-advanced (LTE-advanced, LTE-A) system, for example, a conventional macro base station eNB and a micro base station eNB in a heterogeneous network scenario. Alternatively, the first network device may include a next-generation NodeB (next-generation NodeB, gNB) in an NR system. Alternatively, the first network device may be a first network device in a future evolved PLMN. Alternatively, the first network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the first network device may include a base station in an NTN, to be specific, may be deployed on a flying platform or a satellite. In the NTN, the first network device may serve as a layer 1 (layer 1, L1) relay (relay), may serve as a base station, or may serve as an integrated access and backhaul (integrated access and backhaul, IAB) node. Alternatively, the first network device may be a device that implements a base station function in IoT, for example, a device that implements a base station function in uncrewed aerial vehicle communication, V2X, D2D, or M2M. Optionally, the first network device may be a radio controller in a cloud radio access network (cloud radio access network, CRAN) scenario. Alternatively, the first network device may be a wearable device or a vehicle-mounted device.

Alternatively, the first network device may be a module or unit that can implement some functions of the base station. For example, the first network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, the first network device may be a first network device or a module of the first network device in an open radio access network (open RAN, ORAN) system. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP and the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (also referred to as a small cell), a relay station, an access point, a home base station, a TRP, a transmitting point (transmitting point, TP), or a mobile switching center. This is not specifically limited in embodiments of this application.

The second network device in embodiments of this application may be located in a beam/cell coverage area of the first network device, and the first network device may provide a communication service for the second network device.

Optionally, the second network device may receive a signal sent by the first network device, and reflect, to the terminal device, the signal sent by the first network device.

Optionally, the second network device may also be configured to: receive a signal from the terminal device, and reflect, to the first network device, the signal sent by the terminal device.

For example, the first network device may indicate the second network device to adjust phase distribution, so that the second network device better performs directional signal reflection between the first network device and the terminal device, to improve communication performance.

Optionally, the second network device may be positioned as a low-cost first network device, configured to access the first network device, and perform directional signal reflection between the first network device and the terminal device, to improve performance of communication between the first network device and the terminal device.

For example, the second network device may be an intelligent reflecting surface (intelligent reflecting surface, IRS). Power consumption and costs of the IRS are low. The IRS is a cost-effective solution for enhancing network coverage, and is considered as one of key technologies of a next-generation mobile communication network. The IRS may include one or more of the following: a passive antenna array surface or a processing module. In addition, the IRS may reflect, by adjusting phase distribution on a reflecting surface, a signal transmitted by the first network device to the IRS to an expected direction (for example, reflect to the terminal device), to improve a channel environment in a weak coverage area, and improve a non-line-of-sight (non-line-of-sight, NLOS) path to a LOS path.

The processing module of the second network device is configured to receive control signaling from the first network device.

For example, when there is an obstacle, for example, a high building between the first network device and the terminal device, the first network device may send a signal to the IRS, and the IRS receives the signal from the first network device, and may send the signal from the first network device to the terminal device; or the terminal device may send a signal to the IRS, and the IRS receives the signal from the terminal device, and may send the signal from the terminal device to the first network device.

Optionally, a hardware capability and function positioning of the IRS are different from those of the terminal device, and the IRS may access the first network device by using a set of IRS-dedicated access procedures (that is, access is performed based on the communication method shown in embodiments of this application).

Optionally, the second network device may perform identity differentiation, uplink synchronization, and downlink synchronization with the first network device, so that the second network device accesses the first network device.

For example, the first network device and the second network device implement identity differentiation, so that the first network device can learn of a second network device to which control signaling is to be sent, and the second network device can learn of a first network device from which control signaling is received. The first network device and the second network device implement uplink synchronization and downlink synchronization, so that interference to the second network device and the first network device caused by an uplink slot and a downlink slot in a time division duplex (time division duplex, TDD) system can be reduced.

The terminal device in embodiments of this application may be located in a beam/cell coverage area of the first network device, and the first network device may provide a communication service for the terminal device.

The terminal device in embodiments of this application may be a device having a wireless transceiver function or a chip or a chip system that may be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

Optionally, the terminal device in embodiments of this application may be a user-side device configured to implement a wireless communication function, for example, a terminal or a chip that may be used in the terminal. The terminal may be UE, a user unit, an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) evolved after 5G. The access terminal may be a cellular phone, a smartphone, a cordless phone, a session initiation protocol (session initiation protocol, SIP) phone, a wireless data card, a wireless local loop (wireless local loop, WLL) station, a personal digital assistant (personal digital assistant, PDA), a handheld device (handset) with a wireless communication function, a laptop computer (laptop computer), a tablet computer, a computing device, or another processing device connected to a wireless modem, a vehicle-mounted device, an uncrewed aerial vehicle, a robot, a smart point of sale (point of sale, POS) machine, a customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self driving (self driving), wireless terminal in telemedicine (remote medical), a wireless terminal in smart grid (smart grid), a wireless terminal in transportation security (transportation safety), a wireless terminal in machine type communication (machine type communication, MTC), a wireless terminal in smart city (smart city), a wireless terminal in smart home (smart home), or the like. Alternatively, the terminal may be a terminal having a communication function in the IoT, for example, a terminal in V2X (for example, an internet of vehicles device), a terminal in D2D communication, or a terminal in M2M communication. The terminal may be mobile or fixed.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

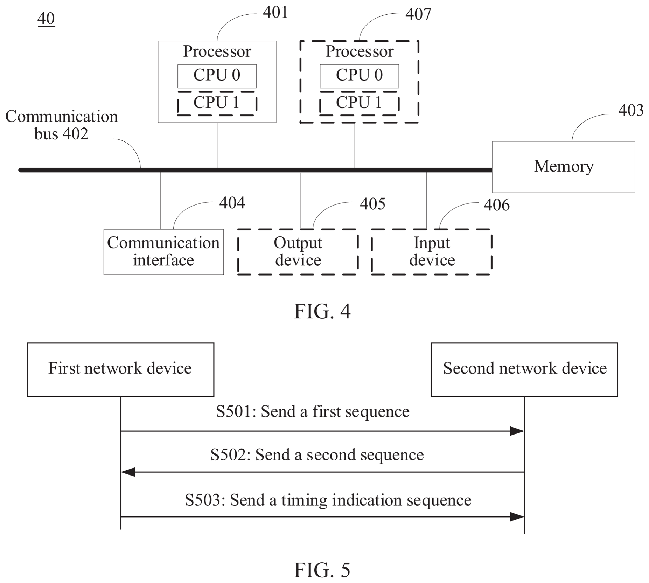

During specific implementation, the first network device, the second network device, or the terminal device shown in FIG. 3 may use a composition structure shown in FIG. 4, or include components shown in FIG. 4. FIG. 4 is a schematic composition diagram of a communication apparatus 40 according to an embodiment of this application. The communication apparatus 40 may be a second network device, or a chip or a system on chip in the second network device;

or may be a first network device or a chip or a system on chip in the first network device; or may be a terminal device or a chip or a system on chip in the terminal device.

As shown in FIG. 4, the communication apparatus 40 includes one or more processors 401 and/or 407. Further, the communication apparatus 40 may further include a communication bus 402 and at least one communication interface (where FIG. 4 is merely an example, and an example in which the communication apparatus 40 includes a communication interface 404 and one processor 401 is used for description). Optionally, the communication apparatus 40 may further include a memory 403.

The processor 401 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

In a specific implementation, in an embodiment, the processor 401 may include one or more CPUs, for example, a CPU 0 and a CPU 1 in FIG. 4.

The communication bus 402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 4, but this does not mean that there is only one bus or only one type of bus. The communication bus 402 is configured to connect different components in the communication apparatus 40, so that the different components in the communication apparatus 40 may communicate and interact with each other.

The communication interface 404 may be a transceiver module, and is configured to communicate with another device or a communication network. The communication network may be, for example, an Ethernet (Ethernet), a RAN, or a WLAN. For example, the communication interface 404 may be an apparatus, for example, a transceiver or a transceiver machine. Alternatively, the communication interface 404 may be a transceiver circuit located in the processor 401, to implement signal input and signal output of the processor.

The memory 403 may be an apparatus having a storage function. The memory 403 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or other optical disc storage, optical disk storage (including compressed optical discs, laser discs, optical discs, digital versatile optical discs, Blu-ray discs, and the like), a magnetic disk storage medium or another magnetic storage device, or any another medium that can be used to carry or store desired program code in the form of instructions or data structures and can be accessed by a computer, but not limited thereto. The memory may exist independently, and is connected to the processor through the communication bus 402. The memory may alternatively be integrated with the processor.

For example, the memory 403 is configured to store computer-executable instructions for executing the solutions of this application, and the processor 401 controls the execution. The processor 401 is configured to execute the computer-executable instructions stored in the memory 403, to implement communication methods provided in embodiments of this application.

Alternatively, optionally, in this embodiment of this application, the processor 401 may perform functions related to processing in the method provided in the following embodiments in this application, and the communication interface 404 is responsible for communication with another device or a communication network. This is not specifically limited in embodiments of this application.

Optionally, the computer-executable instructions in this embodiment of this application may also be referred to as application program code. This is not specifically limited in embodiments of this application.

During specific implementation, in an embodiment, the communication apparatus 40 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, a projector (projector), or the like. The input device 406 communicates with the processor 401, and may receive an input of a user in a plurality of manners. For example, the input device 406 may be a mouse, a keyboard, a touchscreen device, a sensing device, or the like.

It should be noted that the composition structure shown in FIG. 4 does not constitute a limitation on the communication apparatus. In addition to the components shown in FIG. 4, the communication apparatus may include more or fewer components than those shown in the figure, or combine some components, or have different component arrangements.

The following describes the communication method provided in embodiments of this application with reference to the accompanying drawings. It may be understood that, in embodiments of this application, the second network device or the first network device may perform some or all of the steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

FIG. 5 is an interaction diagram in a communication method according to an embodiment of this application. Refer to FIG. 5. The communication method includes the following steps.

S501: A first network device sends a first sequence to a second network device. Correspondingly, the second network device receives the first sequence from the first network device.

The first sequence is associated with identification information of the second network device, in other words, the first sequence is determined based on the identification information of the second network device.

The first sequence may be used for downlink synchronization and for performing identity differentiation on the first network device by the second network device.

Optionally, the second network device may be deployed based on network planning, and the first network device may synchronize deployment information of the second network device, that is, the first network device may determine the identification information of the second network device deployed in a cell covered by the first network device, position information of the second network device, and the like. That is, the identification information of the second network device may be known only by the second network device and the first network device that is associated based on the network planning.

The network planning may include one or more of the following: the identification information of the second network device, a station height of the second network device, an elevation angle of the second network device, the position information (such as longitude and latitude) of the second network device, and an angle of the second network device. This is not limited.

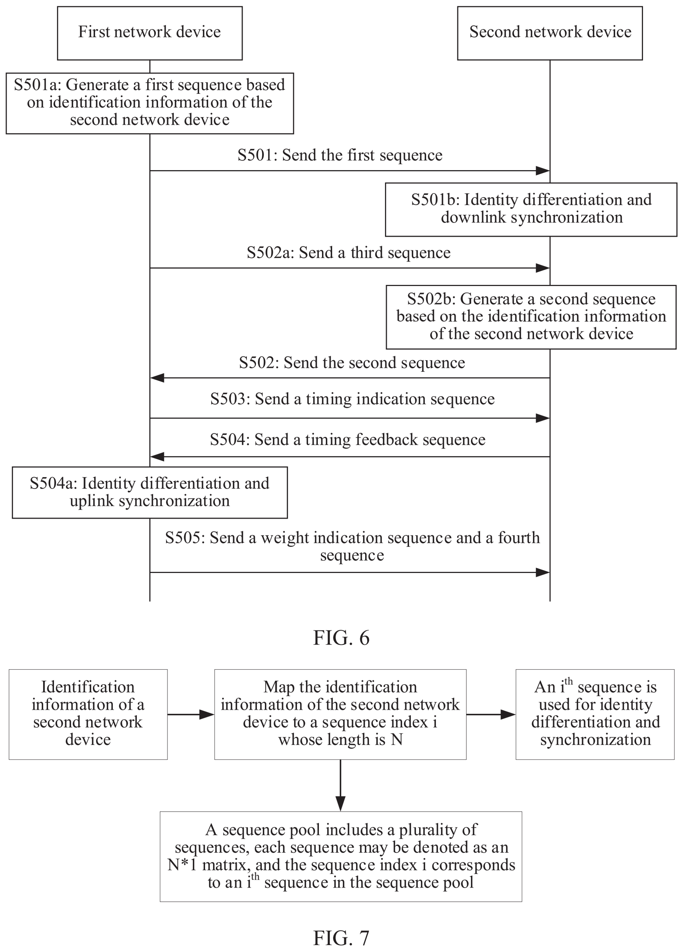

For example, as shown in S501a in FIG. 6, the first network device may generate the first sequence based on the identification information of the second network device.

Optionally, a generation method of the first sequence may be shown in FIG. 7 below. A sequence set including a plurality of sequences may be preset. Each sequence may be an N*1 vector, and a sequence index i corresponds to an $i^{th}$ sequence in the sequence set. The identification information may be mapped to the sequence index i (where for example, the identification information is denoted as x, a predefined number is prime y, and i=x mod y), and a sequence i associated with the sequence index i is used as the first sequence.

For example, the sequence set may be generated based on a Hadamard (Hadamard) matrix, $\mathbf{H_1}$ = [1], and the sequence set may be $\mathbf{H_n} = \begin{bmatrix} \mathbf{H_{n-1}} \mathbf{H_{n-1}} \\ \mathbf{H_{n-1}} - \mathbf{H_{n-1}} \end{bmatrix}$ .

Sequences in columns in the Hadamard matrix are orthogonal to each other.

For example, when the identification information of the second network device is mapped to the sequence index i, the first sequence may be the sequence i associated with the sequence index i, that is, the first sequence is an $i^{th}$ column of $\mathbf{H}_n = [h_1, \ldots , h_n]$, that is, $\mathbf{h_i}$.

For another example, the sequence set may alternatively be a sequence set generated based on an m-sequence.

Optionally, an example in which the identification information is 7-bit information 000 1111 is used, that is, a least significant bit is 1, and a most significant bit is 0. The information is mapped to the first sequence, where a sequence length of the first sequence is $2^7$- 1 = 127. A bit value of a bit in a sequence in a $15^{th}$ column in the sequence set may satisfy the following formula: $\mathbf{h_{15}}(n + 7) = [\mathbf{h_{15}}(n + 4) + \mathbf{h_{15}}(n)]$ *mod* 2.

$\mathbf{h_{15}}(n + 7)$ represents a bit value of an $(n+7)^{th}$ bit in the sequence in the $15^{th}$ column.

For example, a bit value of an $8^{th}$ bit may be expressed as $\mathbf{h}_{15}(8) = [\mathbf{h}_{15}(5) + \mathbf{h}_{15}(1)]$ *mod* 2=[0+1] mod 2=1, and a sequence obtained through iteration to the $8^{th}$ bit is 1100 1111. Similarly, a bit value of a $9^{th}$ bit may be expressed as [0+1] mod 2=1, and a sequence obtained through iteration to the $9^{th}$ bit is 1 1100 1111. By analogy, the first sequence is obtained through iteration to 127 bits.

It may be understood that each column of sequences may be obtained by using the foregoing method, and then the sequence set $\mathbf{H}_n$ is obtained.

As shown in the following Table 1, the foregoing iterative equation may be obtained by using a primitive polynomial table.

Table 1 Comparison table of primitive polynomials

| Quantity of bits | Algebraic expression | Octal representation |
|---|---|---|
| 2 | $x^2 + x + 1$ | 7 |
| 3 | $x^3 + x + 1$ | 13 |

(continued)

| Quantity of bits | Algebraic expression | Octal representation |
|---|---|---|
| 4 | $x^4 + x + 1$ | 23 |
| 5 | $x^5 + x^2 + 1$ | 45 |
| 6 | $x^6 + x + 1$ | 103 |
| 7 | $x^7 + x^3 + 1$ | 211 |

For example, $f(x) = x^7 + x^3 + 1$ is used as an example. A recurrence relationship of a corresponding output sequence may satisfy the following formula: $\mathbf{h}_i(n) = \mathbf{h}_i(n - 3) + \mathbf{h}_i(n - 7)$, that is, $\mathbf{h}_j(n + 7) = \mathbf{h}_i(n + 4) + \mathbf{h}_i(n)$.

$\mathbf{h}_i(n)$ represents a bit value of an $n^{th}$ bit.

Optionally, a length of the identification information of the second network device may be very large. An example in which a length of the first sequence corresponding to the identification information of the second network device is 1.1 million bits. Assuming that the first sequence whose length is 1.1 million bits is modulated by using QPSK, 500,000 REs may be occupied. Therefore, the identification information of the second network device may be split into several parts for separate subsequence generation.

For example, the identification information of the second network device is "11120110001101100000". If the first sequence is directly obtained by using the Hadamard matrix, a length of the first sequence exceeds 1.1 million bits. That the identification information is divided into several groups of identification sub-information is expressed as I=[1111, 0110, 0010, 0110, 0000], and for each piece of identification sub-information in I, a sequence associated with I: $\mathbf{h}_I = [\mathbf{h}_{I,1}; \mathbf{h}_{I,2}; \mathbf{h}_{I,3}; \mathbf{h}_{I,4}; \mathbf{h}_{I,5}]$ may be obtained by using the foregoing two generation methods of the sequence set.

$\mathbf{h}_{I,i}$ may be the $i^{th}$ column of the Hadamard matrix. $\mathbf{h}_{I,1}$ represents a $1^{st}$ subsequence in an $I^{th}$ column. A length of I is 80 bits. A sequence $\mathbf{h}_I$ may be transmitted by using 40 REs in QPSK.

Optionally, the first network device separately sends I, and the second network device sequentially detects subsequences in $\mathbf{h}_I$. When all the subsequences are detected (that is, I received by the second network device is consistent with a sequence generated by the second network device), the first network device sequentially detects subsequences in $\mathbf{h}_I$. When all the subsequences are detected, downlink synchronization may be completed.

Optionally, a correlation between any two first sequences is less than a first preset threshold; or any two first sequences include a plurality of subsequences, and between any two first sequences, a correlation between at least one pair of subsequences with a same start position and a same length is less than a second preset threshold.

For example, if a first time-frequency resource occupies $N_1$ REs, and a quantity of REs occupied by the first sequence should not be greater than $N_1$. When the quantity of REs occupied by the first sequence that is directly generated based on the identification information of the second network device and that is transmitted is greater than $N_1$, the identification information needs to be split into $K_1$ groups of identification sub-information, and each piece of identification sub-information may be represented as a binary number of $n_1$ bits. The first network device may generate a subsequence by using the Hadamard matrix. For identification sub-information whose length is $n_1 = \left\lceil \dfrac{T}{K_1} \right\rceil$ (where the identification information is a T-bit binary number), a length of a corresponding subsequence is $2^{n_1}$, and the length of the first sequence is $2^{n_1} \times K_1$.

$K_1$ is a minimum positive integer that satisfies an inequality $2^{n_1} \times K_1 \leq N_1 \times 2^M$, M may be a modulation order of PSK (for example, M=1 or 2), and $\lceil x \rceil$ represents that x is rounded up (for example, $\lceil 1.1 \rceil = 2$ ).

The first preset threshold may be determined based on an actual communication scenario or an actual communication requirement, and the second preset threshold may be determined based on an actual communication scenario or an actual communication requirement.

For example, on a same time-frequency resource, the first network device may separately send, to a second network device 1, a first sequence 1 associated with the second network device 1, and send, to a second network device 2, a first sequence 2 associated with the second network device 2. Because the correlation between any two first sequences is less than the first preset threshold, interference caused by the first sequence 2 associated with the second network device 2 to identity differentiation and downlink synchronization between the second network device 1 and the first network device can be reduced, and communication reliability can be improved.

Optionally, the first network device may send the first sequence to the second network device on the first time-frequency resource. Correspondingly, the second network device may receive the first sequence from the first network device on the first time-frequency resource.

The first time-frequency resource may be a predefined time-frequency resource.

For example, the first time-frequency resource may be a time-frequency resource segment in a guard interval between switching of a downlink slot and an uplink slot, or a time-frequency resource segment in a corresponding symbol on which an SSB #0 is located. This is not specifically limited herein.

Optionally, a specific value of the first time-frequency resource may be determined based on an actual communication scenario or an actual communication requirement.

Optionally, the first network device may send the first sequence to a plurality of second network devices on the first time-frequency resource. Correspondingly, the plurality of different second network devices may receive the first sequence from the first network device on the first time-frequency resource.

Optionally, the first time-frequency resource may include one or more of the following: a first time domain resource or a first frequency domain resource.

Optionally, the first time-frequency resource may be determined by using the identification information of the second network device and a preset value.

For example, an example in which the identification information of the second network device is x, and the preset value is y. A value obtained based on x mod y is used as an index of a time-frequency resource, and the first time-frequency resource is determined based on the time-frequency resource associated with the index.

For example, when x is 15, y is 7, and a value of x mod y is 1, a time-frequency resource associated with an index 1 may be determined as the first time-frequency resource.

Optionally, the second network device may generate a sequence based on the identification information of the second network device, and identify the first sequence from the first network device by using the sequence.

For example, when receiving the first sequence of the first network device, the second network device detects the first sequence, that is, may compare the first sequence with the sequence generated by the second network device, to determine whether the first sequence is consistent with the sequence generated by the second network device.

For example, as shown in S501b in FIG. 6, when the first sequence is consistent with the sequence generated by the second network device, the second network device may implement identity differentiation on the first network device, and downlink synchronization may be implemented. When the first sequence is inconsistent with the sequence generated by the second network device, the second network device identifies that the first network device should not be accessed, and therefore does not respond.

S502: The second network device sends a second sequence to the first network device. Correspondingly, the first network device receives the second sequence from the second network device.

The second sequence is associated with the identification information of the second network device, in other words, the second sequence is determined based on the identification information of the second network device. A specific generation manner is similar to generation of the first sequence, and details are not described herein again.

The second sequence is used to perform identity differentiation on the second network device by the first network device.

Optionally, the second sequence may be used for uplink synchronization.

For example, as shown in S502b in FIG. 6, the second network device may generate the second sequence based on the identification information of the second network device. A generation method of the second sequence is consistent with the generation method of the first sequence in S501, and details are not described herein again.

Optionally, a correlation between any two second sequences is less than the first preset threshold; or any two second sequences may include a plurality of subsequences, and between any two second sequences, a correlation between at least one pair of subsequences with a same start position and a same length is less than the second preset threshold.

Optionally, as shown in S502a in FIG. 6, before receiving the second sequence from the second network device, the first network device may send a third sequence to the second network device.

The third sequence indicates a second time-frequency resource.

Optionally, the second network device sends the second sequence to the first network device on the second time-frequency resource. Correspondingly, the first network device receives the second sequence from the second network device on the second time-frequency resource.

In an implementable manner, the third sequence may include a device identifier subsequence and one first resource indication subsequence.

The device identifier subsequence is associated with the identification information of the second network device (or the device identifier subsequence may be determined based on the identification information of the second network device), and the first resource indication subsequence indicates a predefined time-frequency resource.

For example, the first resource indication subsequence indicates an index t, that is, corresponds to a $t^{th}$ preset time-frequency resource position. A sequence corresponding to the first resource indication subsequence is denoted as $\mathbf{h}_{index}^{t}$, $t \leq N_{index}$, and $N_{index}$ is an upper limit of a predefined time-frequency resource index value. A sequence (which may be a device identifier subsequence) corresponding to identification information of a second network device k is

denoted as $\mathbf{h}_{ID}^{k}$, $k \leq N_{ID}$, and $N_{ID}$ is an upper limit of an index value of the second network device. The third sequence is a combination of the foregoing two sequences, that is, $\left[\boldsymbol{h}_{ID}^{k}; \boldsymbol{h}_{index}^{t}\right] \in C^{(N_{ID}+N_{index}) \times 1}$.

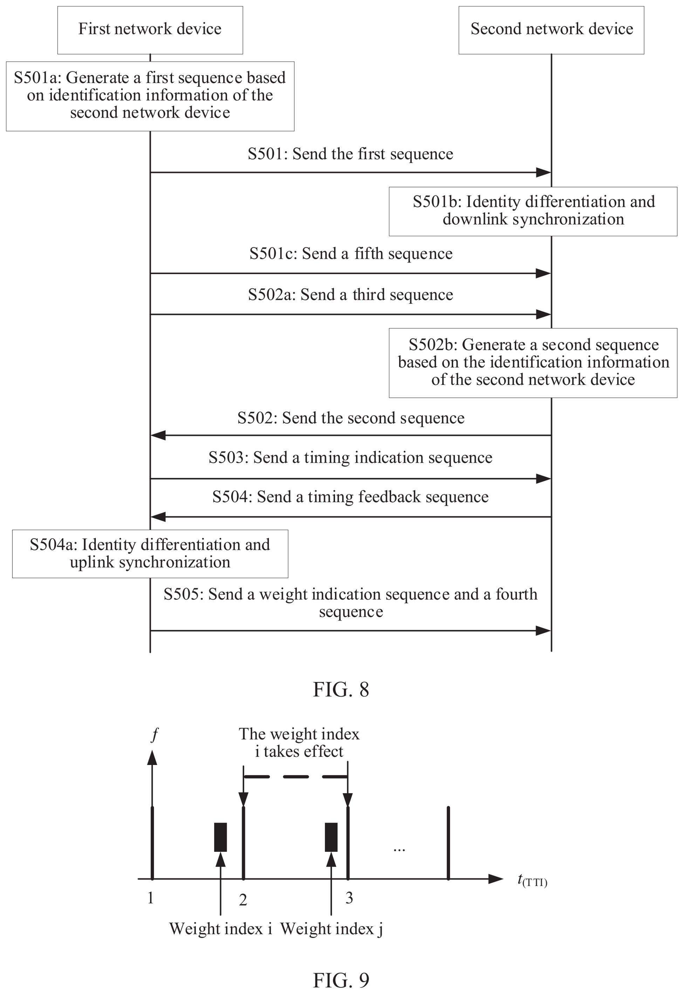

Optionally, as shown in S501c in FIG. 8, the first network device may allocate first identification information to the second network device in a coverage area of the first network device, generate a fifth sequence based on the allocated first identification information, and send the fifth sequence to the second network device. Correspondingly, the second network device receives the fifth sequence from the first network device.

Optionally, the third sequence may be associated with the first identification information that is reallocated by the first network device to the second network device.

A length of the first identification information reallocated to the second network device is less than that of the identification information of the second network device, so that overheads can be reduced.

For example, the first network device may allocate the first identification information to each second network device in the coverage area based on a quantity of second network devices in the coverage area, map the allocated first identification information to the fifth sequence, and send the corresponding fifth sequence to each second network device. The first identification information is compared with an original unique identification code (for example, a 20-bit unique identification code "11120110001101100000"), and a length of the first identification information is less than that of the identification information (for example, 4-bit identification information, 1010) of the second network device, so that signaling overheads can be reduced.

For example, an example in which there are 10 second network devices in the coverage area of the first network device is used. Therefore, first identification information allocated by the first network device to a second network device 1 may be 0000, first identification information allocated by the first network device to a second network device 2 may be 0001, ..., and first identification information allocated by the first network device to a second network device 10 may be 1010. The first network device allocates the first identification information "0000" to the second network device 1, where "0000" corresponds to an index 0, and a $0^{th}$ column of a sequence pool corresponds to a sequence $\mathbf{h}_{l'}$. The fifth sequence may include the first sequence $\mathbf{h}_{l}$ and $\mathbf{h}_{l'}$, and is denoted as $[\mathbf{h}_{l}; \mathbf{h}_{l'}] \in C^{96 \times 1}$. $\mathbf{h}_{l}$ and $\mathbf{h}_{l'}$ may be obtained by using the method in S501. Details are not described herein again.

Optionally, a correlation between any two fifth sequences is less than the first preset threshold; or any two fifth sequences include two subsequences, and between any two fifth sequences, a correlation between at least one pair of subsequences with a same start position and a same length is less than the second preset threshold.

In another implementable manner, the third sequence includes a device identifier subsequence and a plurality of first resource indication subsequences. The first resource indication subsequence may be generated based on one or more of the following: a time domain offset or a frequency domain offset.

Specific values of the time domain offset and the frequency domain offset may be determined based on an actual communication scenario or an actual communication requirement.

Optionally, the time domain offset may be a preset time interval, may be configured by the first network device for the second network device, or may be reported by the second network device. This is not limited.

Optionally, the time domain offset may be at a slot (slot) level, or may be at a symbol (symbol) level. This is not limited.

Using a slot-level time domain offset can reduce sequence overheads compared with using a symbol-level time domain offset.

Optionally, the frequency domain offset may be a preset carrier spacing, may be configured by the first network device for the second network device, or may be reported by the second network device. This is not limited.

Optionally, the frequency domain offset may be at a resource block (resource block, RB) level, or may be at a resource element (resource element, RE) level. This is not limited.

Using an RB-level time domain offset can reduce sequence overheads compared with using an RE-level frequency domain offset.

For example, the time domain offset may be represented as $\Delta t_1$, and the frequency domain offset may be represented as $\Delta f_1$.

Based on the foregoing descriptions of the third sequence and the second time-frequency resource, this application provides two possible examples for a generation method of the third sequence.

In an example, the third sequence may alternatively include three parts: a device identifier subsequence of the second network device, a first resource indication subsequence corresponding to the time domain offset, and a first resource indication subsequence corresponding to the frequency domain offset. A time domain offset sequence set includes $M_t$ sequences whose lengths are $N_t$, and is denoted as $\mathbf{H_t} \in C^{N_t \times M_t}$.

$\mathbf{H_t}$ may be a Hadamard matrix (where $N_t > M_t$) or may be a sequence set in which a correlation between any two sequences is less than the first preset threshold. This is not limited.

Optionally, the time domain offset $\Delta t_1$ may be mapped to a $(\Delta t_1)^{th}$ column of $\mathbf{H_t}$, and a sequence corresponding to the time domain offset may be denoted as $\mathbf{h_t}^{\Delta t_1}$. Similarly, a sequence $\mathbf{h_f}^{\Delta f_1}$ corresponding to the frequency domain offset may be obtained. A subsequence of the device identification information of the second network device k is denoted as $\mathbf{h}_{ID}^k$. The third sequence sent by the first network device to the second network device is a combination of the foregoing three subsequences (the device identifier subsequence of the second network device, the first resource indication subsequence corresponding to the time domain offset, and the first resource indication subsequence corresponding to the frequency domain offset), that is $\left[\mathbf{h}_{ID}^k; \mathbf{h_t}^{\Delta t_1}; \mathbf{h_f}^{\Delta f_1}\right] \in \ \in \ \mathbb{C}^{(N_{ID}+N_t+N_f)\times 1}$.

Optionally, according to analysis of quantities of required second network devices on a plurality of frequency bands such as 3.5 G, U6G, and 28 G, a quantity of second network devices required by each sector is less than 16. According to current network analysis, a length of first identification information of the second network device may be $N_{ID} \leq$ 16 bits. For the time domain offset and the frequency domain offset, 32 time domain offsets and 32 frequency domain offsets may be preset. In other words, if a length of the time domain offset and a length of the frequency domain offset are $N_t = N_f = 32$ bits, a length of the third sequence may be $N_{ID} + N_t + N_f = 80$ bits. If QPSK modulation is used, a quantity of REs required for transmitting the third sequence may be 80/2=40.

In another example, a sequence index $j$ may be determined based on the third sequence together with the identification information of the second network device, the time domain offset, and the frequency domain offset. It is assumed that the first identification information of the second network device is 111, the time domain offset is 0000, and the frequency domain offset is 1111. A format of a sequence index generated based on the first identification information of the second network device, the time domain offset, and the frequency domain offset is preset. In this case, the index $j$ may be represented as 11100001111. The third sequence is a sequence set associated with the sequence index $j$, and is denoted as a $j^{th}$ column of $\mathbf{H}_{third}$.

The sequence set $\mathbf{H}_{third}$ may be obtained by using the generation method of the sequence set in S501. Details are not described herein again.

Compared with the foregoing example of generating the third sequence, a sequence length of the third sequence generated by using the method in this example is larger (where for example, an index of 11 bits corresponds to a length of the sequence of 2048 bits in $\mathbf{H}_{third}$), and a sequence generation manner is simpler.

In a possible embodiment, the first network device may receive the second sequence from the second network device based on a third time-frequency resource by using the time domain offset and/or the frequency domain offset.

For example, an example in which the third time-frequency resource is $(t_1, f_1)$, the time domain offset is $\Delta t_1$, and the frequency domain offset is $\Delta f_1$ is used. In this case, the second network device may send the second sequence at a position of $(t_1 + \Delta t_1, f_1 + \Delta f_1)$, and correspondingly, the first network device may receive the second sequence at the position of $(t_1 + \Delta t_1, f_1 + \Delta f_1)$.

In another implementable manner, the third sequence may include an identifier subsequence and a plurality of first resource indication subsequences. The first resource indication subsequence may be generated based on one or more of the following: a time domain resource index and a frequency domain resource index.

For example, the third sequence may include the device identifier subsequence of the second network device, a first resource indication subsequence corresponding to the time domain resource index, and a first resource indication subsequence corresponding to the frequency domain resource index.

The time domain resource index may be denoted as $t_{ind}$, and the frequency domain resource index may be denoted as $f_{ind}$. A sequence corresponding to the time domain resource index is determined based on a $(t_{ind})^{th}$ column of a time domain resource sequence set, and a sequence corresponding to the frequency domain resource index is determined based on an $(f_{ind})^{th}$ column of a frequency domain resource sequence set.

A generation method of the time domain resource sequence set and the frequency domain resource sequence set is consistent with the generation method of the sequence set in S501, and details are not described herein again.

Optionally, the second network device may send the second sequence to the first network device based on a time domain resource associated with the time domain resource index and/or a frequency domain resource associated with the frequency domain resource index. Correspondingly, the first network device may receive the second sequence from the second network device based on the time domain resource associated with the time domain resource index and/or the frequency domain resource associated with the frequency domain resource index.

Optionally, the first network device sends the third sequence to the second network device on the third time-frequency resource. Correspondingly, the second network device receives the third sequence from the first network device on the third time-frequency resource.

The third time-frequency resource is a predefined time-frequency resource, and may be a time-frequency resource segment in a guard interval between switching of a downlink slot and an uplink slot, or a time-frequency resource segment in a corresponding symbol on which an SSB #1 is located. This is not specifically limited herein.

Optionally, a specific value of the third time-frequency resource may be determined based on an actual communication scenario or an actual communication requirement.

Optionally, a correlation between any two third sequences is less than the first preset threshold; or any two third sequences include a plurality of subsequences, and between any two third sequences, a correlation between at least one pair of subsequences with a same start position and a same length is less than the second preset threshold.

S503: The first network device sends a timing indication sequence to the second network device. Correspondingly, the second network device receives the timing indication sequence from the first network device.

The timing indication sequence is used to specify a timing advance.

The timing advance is determined by the first network device based on the second sequence.

Distances between different second network devices and the first network device are different, so that when different second network devices simultaneously send signals to the first network device, the signals arrive at the first network device at different time. To eliminate such a time error of signal arrival, different second network devices may receive the timing advance from the first network device, and the second network device may send a signal to the first network device based on the timing advance, to ensure that the signals sent by the different second network devices to the first network device arrive at the first network device with time domain alignment.

Based on the timing advance, this application provides a possible embodiment.

Optionally, timing uncertainty is related to a cell radius, and a transmission delay of 6.7 microseconds may be caused by a signal sent by the second network device to the first network device every 1 kilometer.

Optionally, a subcarrier spacing may be expressed as $SCS_\mu = 15KHz \times 2^\mu$, where $\mu$ is a coefficient, and a larger value of $\mu$ indicates a larger subcarrier spacing.

For example, when $\mu$ is 5, a distance of one timing advance may be expressed as $16 \times 64 \times \frac{T_c}{2^\mu} = 39\,m$, where

$$T_c = \frac{1}{SCS_\mu \times N_f} = \frac{1}{480000 \times 4096} = 0.509\,ns.$$

It may be understood that the second network device needs to reflect a signal from the first network device, and a distance between the second network device and the first network device cannot be excessively long. Otherwise, energy of an incident signal of the second network device may be excessively small.

For example, when the cell radius is 1 kilometer, 1 km/39 m $\approx$ 26, and similar to the third sequence, a timing indication sequence may be generated by using the identification information of the second network device and a timing advance whose length is at least 26.

Optionally, the second network device may adjust, based on the timing advance, time at which a signal sent by the second network device arrives at the first network device, so that an error between time at which the signals from the different second network devices arrive at the first network device can be eliminated.

Optionally, the timing indication sequence may further indicate a timing feedback resource, and the timing feedback resource may be a predefined time-frequency resource.

Optionally, as shown in S504 in FIG. 6 below, the second network device may send the timing feedback sequence to the first network device on the timing feedback resource, or after receiving the timing indication sequence, the second network device may randomly occupy a time-frequency resource to send the timing feedback sequence to the first network device. This is not limited.

The timing feedback sequence indicates that the second network device receives the timing indication sequence.

Optionally, the second network device may map timing feedback information to a sequence to obtain the timing feedback sequence.

Optionally, the timing feedback information may be an acknowledgment (acknowledgement, ACK) character or a negative acknowledgement (non-ACK, NACK) character.

For example, the second network device may send ACK to the first network device on the timing feedback resource. Correspondingly, the first network device may receive ACK from the second network device on the timing feedback resource.

For example, the timing feedback information may be 1-bit information. A bit value 1 indicates that the second network device receives the timing indication sequence (that is, ACK) from the first network device, and a bit value 0 indicates that the second network device does not receive the timing indication sequence (that is, NACK) from the first network device. Alternatively, a bit value 0 indicates that the second network device receives the timing indication sequence (that is, ACK) from the first network device, and a bit value 1 indicates that the second network device does not receive the timing indication sequence (that is, NACK) from the first network device. This is not limited.

Optionally, the second network device may generate a timing sequence set index based on the 1-bit information and the first identification information.

The timing sequence set is obtained by using the generation method of the sequence set in S501. Details are not described herein again.

For example, the timing sequence set index returned by the second network device may be 1+111 (that is, ACK and the identification information (111) of the second network device are returned), and the timing sequence set index "1111" (corresponding to 15 in decimal notation) is associated with a 15$^{th}$ column of the timing sequence set. The timing feedback sequence may be generated based on the 15$^{th}$ column of the timing sequence set, and the timing feedback sequence is sent to the first network device.

Optionally, as shown in S504a in FIG. 6 below, when the first network device receives the timing feedback sequence from the second network device, identity differentiation on the second network device may be implemented, and uplink synchronization may be implemented.

Based on the method shown in FIG. 5, the second network device may implement identity differentiation on the first network device based on the first sequence sent by the first network device, that is, determine the first network device that may be accessed, to implement downlink synchronization. The second network device sends the second sequence to the first network device, so that the first network device can implement identity differentiation on the second network device based on the second sequence, and further determine the timing advance based on the second sequence, and the second network device can implement uplink synchronization based on the timing advance. In this way, the second network device can receive a signal from the first network device, and forward the signal to a terminal device; or receive a signal from the terminal device, and forward the signal to the first network device, to improve reliability of communication between the terminal device and the first network device, and improve performance of transmission between the terminal device and the first network device.

Based on the method shown in FIG. 5, the first network device may further send the weight indication sequence and the fourth sequence to the second network device. Correspondingly, the second network device may receive the weight indication sequence and the fourth sequence that are from the first network device.

The weight indication sequence indicates phase distribution of the second network device, the weight indication sequence is associated with the identification information of the second network device, and the fourth sequence indicates a fourth time-frequency resource on which the second network device adjusts phase distribution associated with the weight indication sequence.

For example, as shown in S505 in FIG. 6 below, after identity differentiation and uplink and downlink synchronization are performed between the first network device and the second network device, the first network device sends the weight indication sequence to the second network device.

The weight indication sequence includes the device identifier subsequence and one or more weight indication subsequences.

The device identifier subsequence is associated with the identification information of the second network device, and the weight indication subsequence is associated with the weight information.

Optionally, the weight indication sequence indicates one or more of the following: a horizontal beam weight indication sequence or a vertical beam weight indication sequence.

Optionally, the second network device may adjust, based on the weight indication sequence, the phase distribution associated with the weight indication sequence.

Optionally, the weight indication sequence may be generated by using weight information. It may be understood that the first network device maps the generated weight information to the weight indication sequence, and then sends the weight indication sequence to the second network device.

Optionally, the weight information associated with the weight indication sequence may be a weight index, or may be other information (for example, a bitmap) that may represent a weight. This is not limited.

Optionally, the weight information associated with the weight indication sequence may be horizontal beam weight information, or the weight information associated with the weight indication sequence may be vertical beam weight information, or the weight information associated with the weight indication sequence may be horizontal beam weight information and vertical beam weight information. This is not limited.

The weight index may include a horizontal beam weight index and/or a vertical beam weight index.

In an implementable embodiment, an example in which the weight index includes the horizontal beam weight index and the vertical beam weight index. Assuming that the second network device has H beams in a horizontal direction and V beams in a vertical direction, the second network device has a total of H × V beams, and a sequence of H + V bits may be used to represent the weight index.

A sequence of H bits indicates a horizontal beam weight index, a sequence of V bits indicates a vertical beam weight index, and H and V are positive integers.

Optionally, the horizontal beam weight index is denoted as h, the vertical beam weight index is denoted as v, and an h$^{th}$ column and a v$^{th}$ column of a horizontal beam sequence set $\mathbf{H_H}$ and a vertical beam sequence set $\mathbf{H_V}$ may be obtained separately.

The horizontal beam sequence set and the vertical beam sequence set may be obtained by using the generation method of the sequence set in S502. Details are not described herein again.

For example, the first network device may indicate the weight index h and the weight index v to the second network device, and the second network device reflects a signal from the first network device or the terminal device based on a horizontal beam associated with the weight index h and a vertical beam associated with the weight index v. $1 \leq h \leq H$ and $1 \leq v \leq V$.

Based on the foregoing descriptions of the weight information associated with the weight indication sequence, an example in which the weight information associated with the weight indication sequence is a weight index is used, and this application provides three possible implementations.

In a first possible implementation, a horizontal beam 1 may be represented by using a weight index 1, a horizontal beam 2 may be represented by using a weight index 2, ..., and a horizontal beam H may be represented by using a weight index H.

In a second possible implementation, a vertical beam 1 may be represented by using a weight index 1, a vertical beam 2 may be represented by using a weight index 2, ..., and a vertical beam V may be represented by using a weight index V.

In a third possible implementation, a horizontal beam 1 and a vertical beam 1 may be represented by using a weight index (1, 1), the horizontal beam 1 and a vertical beam 2 may be represented by using a weight index (1, 2), ..., and a horizontal beam H and a vertical beam V may be represented by using a weight index (H, V).

Alternatively, one bit may be associated with one beam. If a value of a bit is 1, it indicates that a beam corresponding to the bit is used to send a signal and/or receive a signal; or if a value of a bit is 0, it indicates that a beam corresponding to the bit is not used to send a signal and/or receive a signal; or if a value of a bit is 0, it indicates that a beam corresponding to the bit is used to send a signal and/or receive a signal; or if a value of a bit is 1, it indicates that a beam corresponding to the bit is not used to send a signal and/or receive a signal. This is not limited.

For example, an example in which there are three horizontal beams and two vertical beams of the second network device. If a value of a bitmap is 01010 and a least significant bit starts, it indicates that a horizontal beam 2 and a vertical beam 2 are used to reflect signals, and a horizontal beam 1, a horizontal beam 3, and a vertical beam 1 are not used to reflect signals. Alternatively, if a value of a bitmap may be 00110, it indicates that a horizontal beam 1 and a vertical beam 2 are used to reflect signals, and a horizontal beam 2, a horizontal beam 3, and a vertical beam 1 are not used to reflect signals.

Optionally, the first network device may map a generated weight index to a sequence, to generate the weight indication sequence, and then send the weight indication sequence to the second network device.

For example, in the U6G frequency band, an example in which a size of the second network device is 0.5*0.5 m$^2$, and an array element spacing is 0.4 times a wavelength is used, and a quantity of horizontal beams and a quantity of vertical beams of the second network device are both 28. Therefore, a horizontal beam index and a vertical beam index each need 28 bits. Consistent with a generation method of the third sequence, a length of the weight indication sequence is $N_{ID} + H + V = 16 + 28 + 28 = 72$ bits, and in QPSK modulation, a quantity of required REs is 72/2=36.

Because strength of a signal received by the second network device and strength of a signal sent by the second network device are associated with an incident angle of a beam, phase distribution is adjusted based on the horizontal beam weight indication sequence and/or the vertical beam weight indication sequence, so that a signal can be reflected in a specific direction, to effectively improve performance of transmission between the terminal device and the first network device.

Optionally, the second network device adjusts, on the fourth time-frequency resource, the phase distribution associated with the weight indication sequence.

For example, as shown in FIG. 9 below, a horizontal axis represents a time domain, and a vertical axis represents a frequency domain. An example in which the second network device receives a weight index i from the first network device before a moment 2, and receives a weight index j from the first network device before a moment 3 is used. If the second network device determines, by using a fourth sequence 1, that an effective moment of the weight index i is the moment 2, the second network device adjusts, at the moment 2, phase distribution associated with the weight index i. Correspondingly, when the second network device receives the weight index j, if it is determined, by using a fourth sequence 2, that an effective moment of the weight index j is the moment 3, the second network device may adjust, at the moment 3, phase distribution associated with the weight index j. It may be understood that, effective time of the weight index i is from the moment 2 to the moment 3.

The fourth sequence may include a device identifier subsequence and one or more second resource indication subsequences. The second resource indication subsequence is associated with at least one of a predefined time domain resource and a predefined frequency domain resource.

Optionally, the weight indication sequence and the fourth sequence may be transmitted in a same sequence, or may be separately transmitted. This is not limited.

Based on the foregoing descriptions of the weight indication sequence and the fourth sequence, this application provides two possible embodiments.

In a first possible embodiment, an example in which the weight information and the fourth sequence are located in a same sequence is used. The first network device sends the weight indication sequence to the second network device. The second network device may obtain the weight information based on the weight indication sequence, and determine an effective moment and a frequency domain resource of the weight information by using the fourth sequence. The second network device adjusts, at the effective moment, phase distribution associated with the weight information.

The fourth sequence includes the device identifier subsequence, the weight indication subsequence, and the second resource indication subsequence.

In a second possible embodiment, an example in which the first network device generates the weight indication sequence based on the weight information is used. The first network device sends the weight indication sequence and the fourth sequence to the second network device. The second network device may determine the weight information based on the weight indication sequence. The second network device may determine an effective moment of the weight information by using the fourth sequence. The second network device may adjust, at the effective moment, phase distribution associated with the weight information.

Optionally, a correlation between any two fourth sequences is less than a first preset threshold; or any two fourth sequences include a plurality of subsequences, and between any two fourth sequences, a correlation between at least one pair of subsequences with a same start position and a same length is less than a second preset threshold.

Optionally, one or more of the following are associated with the first identification information: the third sequence, the fourth sequence, the weight indication sequence, or the device identifier subsequence.

Optionally, in this embodiment of this application, a correlation between any two sequences of each sequence type is less than a first threshold, or each sequence includes a plurality of types of subsequences, and between any two sequences, a correlation between subsequences of at least one type is less than a second preset threshold. This can reduce mutual interference caused by the sequences in a transmission process, improve transmission performance, and effectively improve communication reliability.

According to the content described in this application, it may be understood that any sequence between the first network device and the second network device is generated based on the identification information of the second network device, so that sequences associated with different second network devices can be effectively distinguished, and reliability of communication between the second network device and the first network device is improved.

It should be noted that various embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined based on an internal logical relationship thereof, to form a new embodiment.

It may be understood that, in embodiments of this application, an execution entity may perform some or all of the steps in embodiments of this application. The steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

The foregoing mainly describes the solutions provided in this application from the perspective of interaction between devices. Correspondingly, this application further provides a communication apparatus, and the communication apparatus is configured to implement the foregoing methods. The communication apparatus may be the second network device in the foregoing method embodiments, or an apparatus including the second network device, or a component that can be used in the second network device. Alternatively, the communication apparatus may be the first network device in the foregoing method embodiments, or an apparatus including the first network device, or a component that can be used in the first network device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes outside the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

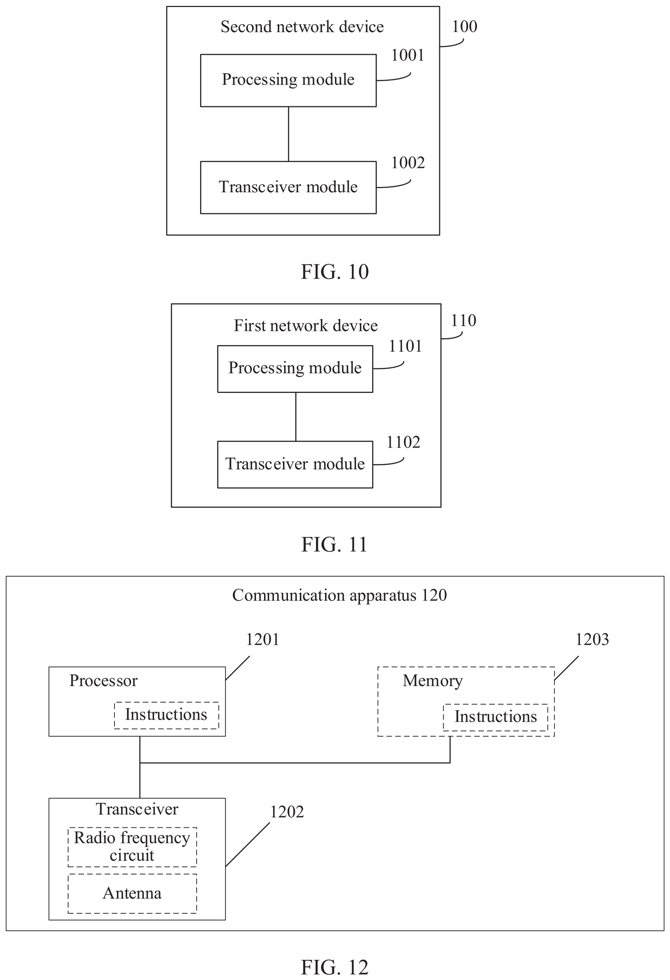

In an implementation scenario, an example in which the communication apparatus is the second network device in the foregoing method embodiment is used. FIG. 10 is a diagram of a structure of the second network device 100. The second network device 100 includes a processing module 1001 and a transceiver module 1002.

In some embodiments, the second network device 100 may further include a storage module (not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver machine, a transceiver, or a communication interface.

In some embodiments, the transceiver module 1002 may include a receiving module and a sending module that are respectively configured to perform the receiving and sending steps performed by the second network device in the foregoing method embodiments, and/or configured to support another process of the technology described in this specification. The processing module 1001 may be configured to perform the processing (for example, determining and generation) steps performed by the second network device in the foregoing method embodiments, and/or configured to support another process of the technology described in this specification.

For example, the transceiver module 1002 is configured to receive a first sequence from a first network device, where the first sequence is associated with identification information of the second network device, and the first sequence is used for downlink synchronization. The transceiver module 1002 is further configured to send a second sequence to the first network device, where the second sequence is associated with the identification information of the second network device. The transceiver module 1002 is further configured to receive a timing indication sequence from the first network device, where the timing indication sequence indicates a timing advance, and the timing advance is determined by the first network device based on the second sequence.

In a possible implementation, the transceiver module 1002 is further configured to receive the first sequence from the first network device on a first time-frequency resource, where the first time-frequency resource is a predefined time-frequency resource.

In a possible implementation, the transceiver module 1002 is further configured to receive a third sequence from the first network device, where the third sequence indicates a second time-frequency resource, the third sequence includes a device identifier subsequence and one or more first resource indication subsequences, the device identifier subsequence is associated with the identification information of the second network device, and the first resource indication subsequence is associated with at least one of a predefined time domain resource and a predefined frequency domain resource. The transceiver module 1002 is further configured to send the second sequence to the first network device on the second time-frequency resource.

In a possible implementation, the transceiver module 1002 is further configured to receive the third sequence from the first network device on a third time-frequency resource, where the third time-frequency resource is a predefined time-frequency resource.

In a possible implementation, the timing indication sequence further indicates a timing feedback resource. The transceiver module 1002 is further configured to send a timing feedback sequence to the first network device on the timing feedback resource, where the timing feedback resource is a predefined time-frequency resource, and the timing feedback sequence indicates that the second network device receives the timing indication sequence.

In a possible implementation, the transceiver module 1002 is further configured to receive a weight indication sequence and a fourth sequence that are from the first network device. The weight indication sequence indicates phase distribution of the second network device. The weight indication sequence is associated with the identification information of the second network device. The fourth sequence indicates a fourth time-frequency resource on which the second network device adjusts phase distribution associated with the weight indication sequence. The weight indication sequence includes the device identifier subsequence and one or more weight indication subsequences. The fourth sequence includes the device identifier subsequence and one or more second resource indication subsequences. The device identifier subsequence is associated with the identification information of the second network device. The weight indication subsequence is associated with weight information. The second resource indication subsequence is associated with at least one of a predefined time domain resource and a predefined frequency domain resource. The processing module 1001 is configured to adjust, on a fourth time-frequency resource, the phase distribution associated with the weight indication sequence.

In a possible implementation, the weight indication sequence and the fourth sequence are located in a same sequence, and the fourth sequence includes the device identifier subsequence, the weight indication subsequence, and the second resource indication subsequence.

In a possible implementation, any sequence between the first network device and the second network device is associated with the identification information of the second network device.

In a possible implementation, the transceiver module 1002 is further configured to receive a fifth sequence from the first network device, where the fifth sequence indicates first identification information allocated by the first network device to the second network device.

In a possible implementation, one or more of the following are associated with the first identification information: the third sequence, the fourth sequence, the weight indication sequence, or the device identifier subsequence.

In a possible implementation, a correlation between any two sequences of each sequence type is less than a first preset threshold; or each sequence type includes a plurality of subsequences, and between any two sequences of a same type, a correlation between at least one pair of subsequences with a same start position and a same length is less than a second preset threshold.

In this application, the second network device 100 is presented in a form of the functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in hardware implementation, a person skilled in the art may figure out that the second network device 100 may be in a form of the communication apparatus 40 shown in FIG. 4.

In an example, functions/implementation processes of the processing module 1001 in FIG. 10 may be implemented by the processor 401 in the communication apparatus 40 shown in FIG. 4 by invoking the computer-executable instructions stored in the memory 403. Functions/implementation processes of the transceiver module 1002 in FIG. 10 may be implemented by the communication interface 404 in the communication apparatus 40 shown in FIG. 4.

In some embodiments, when the second network device 100 in FIG. 10 is a chip or a chip system, the functions/implementation processes of the transceiver module 1002 may be implemented by using an input/output interface (or a communication interface) of the chip or the chip system, and the functions/implementation processes of the processing module 1001 may be implemented by a processor (or a processing circuit) of the chip or the chip system.

The second network device 100 provided in this embodiment may perform the foregoing method. Therefore, for technical effects that can be achieved by the second network device 100, refer to the foregoing method embodiments. Details are not described herein again.

In another implementation scenario, an example in which the communication apparatus is the first network device in the foregoing method embodiment is used. FIG. 11 is a diagram of a structure of the first network device 110. The first network device 110 includes a processing module 1101 and a transceiver module 1102.

In some embodiments, the first network device 110 may further include a storage module (not shown in FIG. 11), configured to store program instructions and data.

In some embodiments, the transceiver module 1102 may also be referred to as a transceiver unit, and is configured to implement a sending function and/or a receiving function. The transceiver module 1102 may include a transceiver circuit, a transceiver machine, a transceiver, or a communication interface.

In some embodiments, the transceiver module 1102 may include a receiving module and a sending module that are respectively configured to perform the receiving and sending steps performed by the first network device in the foregoing method embodiments, and/or configured to support another process of the technology described in this specification. The processing module 1101 may be configured to perform the processing (for example, determining and generation) steps performed by the terminal in the foregoing method embodiments, and/or configured to support another process of the technology described in this specification.

For example, the transceiver module 1102 is configured to send a first sequence to a second network device, where the first sequence is associated with identification information of the second network device, and the first sequence is used for downlink synchronization. The transceiver module 1102 is further configured to receive a second sequence from the second network device, where the second sequence is associated with the identification information of the second network device. The transceiver module 1102 is further configured to send a timing indication sequence to the second network device, where the timing indication sequence indicates a timing advance, and the timing advance is determined by the first network device based on the second sequence.

In a possible implementation, the transceiver module 1102 is further configured to send the first sequence to the second network device on a first time-frequency resource, where the first time-frequency resource is a predefined time-frequency resource.

In a possible implementation, the transceiver module 1102 is further configured to send a third sequence to the second network device, where the third sequence indicates a second time-frequency resource, the third sequence includes a device identifier subsequence and one or more first resource indication subsequences, the device identifier subsequence is associated with the identification information of the second network device, and the first resource indication subsequence is associated with at least one of a predefined time domain resource and a predefined frequency domain resource. The transceiver module 1102 is further configured to receive the second sequence from the second network device on the second time-frequency resource.

In a possible implementation, the transceiver module 1102 is further configured to send the third sequence to the second network device on a third time-frequency resource, where the third time-frequency resource is a predefined time-frequency resource.

In a possible implementation, the timing indication sequence further indicates a timing feedback resource. The transceiver module 1102 is further configured to receive a timing feedback sequence from the second network device on the timing feedback resource, where the timing feedback resource is a predefined time-frequency resource, and the timing feedback sequence is used to determine that the second network device receives the timing advance from the first network device.

In a possible implementation, the transceiver module 1102 is further configured to send a weight indication sequence and a fourth sequence to the second network device. The weight indication sequence indicates phase distribution of the second network device. The weight indication sequence is associated with the identification information of the second network device. The fourth sequence indicates a fourth time-frequency resource on which the second network device adjusts phase distribution associated with the weight indication sequence. The weight indication sequence includes the device identifier subsequence and one or more weight indication subsequences. The fourth sequence includes the device identifier subsequence and one or more second resource indication subsequences. The device identifier subsequence is associated with the identification information of the second network device. The weight indication subsequence is associated with weight information. The second resource indication subsequence is associated with at least one of a predefined time domain resource and a predefined frequency domain resource.

In a possible implementation, weight indication information sequence and the fourth sequence are located in a same sequence, and the fourth sequence includes the device identifier subsequence, the weight indication subsequence, and the second resource indication subsequence.

In a possible implementation, any sequence between the first network device and the second network device is associated with the identification information of the second network device.

In a possible implementation, the transceiver module 1102 is further configured to send a fifth sequence to the second network device, where the fifth sequence indicates identification information allocated by the first network device to the second network device.

In a possible implementation, one or more of the following are associated with the first identification information: the third sequence, the fourth sequence, the weight indication sequence, or the device identifier subsequence.

In a possible implementation, a correlation between any two sequences of each sequence type is less than a first preset threshold; or each sequence type includes a plurality of subsequences, and between any two sequences of a same type, a correlation between at least one pair of subsequences with a same start position and a same length is less than a second preset threshold.

In this application, the first network device 110 presented in a form of the functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in hardware implementation, a person skilled in the art may figure out that the first network device 110 may be in a form of the communication apparatus 40 shown in FIG. 4.

In an example, functions/implementation processes of the processing module 1101 in FIG. 11 may be implemented by the processor 401 in the communication apparatus 40 shown in FIG. 4 by invoking the computer-executable instructions stored in the memory 403. Functions/implementation processes of the transceiver module 1102 in FIG. 11 may be implemented by the communication interface 404 in the communication apparatus 40 shown in FIG. 4.

In some embodiments, when the first network device 110 in FIG. 11 is a chip or a chip system, functions/implementation processes of the transceiver module 1102 may be implemented by using an input/output interface (or a communication interface) of the chip or the chip system, and the functions/implementation processes of the processing module 1101 may be implemented by a processor (or a processing circuit) of the chip or the chip system.

The first network device 110 provided in this embodiment may perform the foregoing method. Therefore, for technical effects that can be achieved by the first network device 110, refer to the foregoing method embodiments. Details are not described herein again.

In a possible product form, the second network device or the first network device in embodiments of this application may alternatively be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described throughout this application.

In another possible product form, the second network device or the first network device in embodiments of this application may be implemented in a general bus architecture. For ease of description, FIG. 12 is a diagram of a structure of a communication apparatus 120 according to an embodiment of this application. The communication apparatus 120 includes a processor 1201 and a transceiver 1202. The communication apparatus 120 may be a second network device, or a chip or a module in the second network device. Alternatively, the communication apparatus 120 may be a first network device, or a chip or a module in the first network device. FIG. 12 shows only main components of the communication apparatus 120. In addition to the processor 1201 and the transceiver 1202, the communication apparatus may further include a memory 1203.

Optionally, the processor 1201 is mainly configured to: process a communication protocol and communication data, control the entire communication apparatus, execute a software program, and process data of the software program. The memory 1203 is mainly configured to store the software program and data. The transceiver 1202 may include a radio frequency circuit and an antenna. The radio frequency circuit is mainly configured to: perform conversion between a baseband signal and a radio frequency signal, and process a radio frequency signal. The antenna is mainly configured to receive a radio frequency signal in a form of an electromagnetic wave and send a radio frequency signal in a form of an electromagnetic wave.

Optionally, the processor 1201, the transceiver 1202, and the memory 1203 may be connected through a communication bus.

After the communication apparatus is powered on, the processor 1201 may read the software program in the memory 1203, interpret and execute instructions of the software program, and process data of the software program. When data needs to be sent wirelessly, the processor 1201 performs baseband processing on the to-be-sent data, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1201. The processor 1201 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, an embodiment of this application further provides a communication apparatus. The communication apparatus includes a processor, configured to implement the method in any one of the foregoing method embodiments. The communication apparatus may be the second network device or the first network device in the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may be or may not be physically separated, this is, may be located together in the same place or distributed on a plurality of network units. Components displayed as units may be or may not be physical units. Some or all of the units may be selected based on actual requirements to achieve the objectives of the solutions of embodiments.

In addition, functional units in various embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not indicate that these measures cannot be combined to produce a better effect.

Although this application is described with reference to specific features and embodiments thereof, it is clear that various modifications and combinations may be made without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, provided that these modifications and variations made to this application fall within the scope of the claims of this application and equivalent techniques thereof, this application is also intended to cover such modifications and variations.

**Claims**

1. A communication method, comprising:

   receiving a first sequence from a first network device, wherein the first sequence is associated with identification information of a second network device, and the first sequence is used for downlink synchronization;
   sending a second sequence to the first network device, wherein the second sequence is associated with the identification information of the second network device; and
   receiving a timing indication sequence from the first network device, wherein the timing indication sequence indicates a timing advance, and the timing advance is determined by the first network device based on the second sequence.

2. The method according to claim 1, wherein receiving the first sequence from the first network device comprises:
   receiving the first sequence from the first network device on a first time-frequency resource, wherein the first time-frequency resource is a predefined time-frequency resource.

3. The method according to claim 1 or 2, wherein before sending the second sequence to the first network device, the method further comprises:

   receiving a third sequence from the first network device, wherein the third sequence indicates a second time-frequency resource, the third sequence comprises a device identifier subsequence and one or more first resource indication subsequences, the device identifier subsequence is associated with the identification information of the second network device, and the first resource indication subsequence is associated with at least one of a predefined time domain resource and a predefined frequency domain resource; and
sending the second sequence to the first network device on the second time-frequency resource.

4. The method according to claim 3, wherein receiving the third sequence from the first network device comprises:
receiving the third sequence from the first network device on a third time-frequency resource, wherein the third time-frequency resource is a predefined time-frequency resource.

5. The method according to any one of claims 1 to 4, wherein the timing indication sequence further indicates a timing feedback resource, and the method further comprises:
sending a timing feedback sequence to the first network device on the timing feedback resource, wherein the timing feedback sequence indicates that the second network device receives the timing indication sequence.

6. The method according to any one of claims 1 to 5, wherein the method further comprises:

receiving a weight indication sequence and a fourth sequence that are from the first network device, wherein the weight indication sequence indicates phase distribution of the second network device, the weight indication sequence is associated with the identification information of the second network device, and the fourth sequence indicates a fourth time-frequency resource on which the second network device adjusts phase distribution associated with the weight indication sequence, wherein
the weight indication sequence comprises the device identifier subsequence and one or more weight indication subsequences, the fourth sequence comprises the device identifier subsequence and one or more second resource indication subsequences, the device identifier subsequence is associated with the identification information of the second network device, the weight indication subsequence is associated with weight information, and the second resource indication subsequence is associated with at least one of a predefined time domain resource and a predefined frequency domain resource; and
adjusting, on the fourth time-frequency resource, the phase distribution associated with the weight indication sequence.

7. The method according to claim 6, wherein
the weight indication sequence and the fourth sequence are located in a same sequence, and the fourth sequence comprises the device identifier subsequence, the weight indication subsequence, and the second resource indication subsequence.

8. The method according to any one of claims 1 to 7, wherein the method further comprises:
any sequence between the first network device and the second network device is associated with the identification information of the second network device.

9. The method according to any one of claims 1 to 8, wherein the method further comprises:
receiving a fifth sequence from the first network device, wherein the fifth sequence indicates first identification information allocated by the first network device to the second network device.

10. The method according to claim 9, wherein
one or more of the following are associated with the first identification information: the third sequence, the fourth sequence, the weight indication sequence, or the device identifier subsequence.

11. The method according to any one of claims 1 to 10, wherein the method further comprises:

a correlation between any two sequences of each sequence type is less than a first preset threshold; or
each sequence type comprises a plurality of subsequences, and between any two sequences of a same type, a correlation between at least one pair of subsequences with a same start position and a same length is less than a second preset threshold.

12. A communication method, comprising:

sending a first sequence to a second network device, wherein the first sequence is associated with identification information of the second network device, and the first sequence is used for downlink synchronization;
receiving a second sequence from the second network device, wherein the second sequence is associated with the identification information of the second network device; and
sending a timing indication sequence to the second network device, wherein the timing indication sequence indicates a timing advance, and the timing advance is determined by a first network device based on the second sequence.

13. The method according to claim 12, wherein sending the first sequence to the second network device comprises:
sending the first sequence to the second network device on a first time-frequency resource, wherein the first time-frequency resource is a predefined time-frequency resource.

14. The method according to claim 12 or 13, wherein receiving the second sequence from the second network device comprises:

sending a third sequence to the second network device, wherein the third sequence indicates a second time-frequency resource, the third sequence comprises a device identifier subsequence and one or more first resource indication subsequences, the device identifier subsequence is associated with the identification information of the second network device, and the first resource indication subsequence is associated with at least one of a predefined time domain resource and a predefined frequency domain resource; and
receiving the second sequence from the second network device on the second time-frequency resource.

15. The method according to claim 14, wherein sending the third sequence to the second network device comprises:
sending the third sequence to the second network device on a third time-frequency resource, wherein the third time-frequency resource is a predefined time-frequency resource.

16. The method according to any one of claims 12 to 15, wherein the timing indication sequence further indicates a timing feedback resource, and the method further comprises:
receiving a timing feedback sequence from the second network device on the timing feedback resource, wherein the timing feedback resource is a predefined time-frequency resource, and the timing feedback sequence indicates that the second network device receives the timing indication sequence.

17. The method according to any one of claims 12 to 16, wherein the method further comprises:

sending the weight indication sequence and the fourth sequence to the second network device, wherein the weight indication sequence indicates phase distribution of the second network device, the weight indication sequence is associated with the identification information of the second network device, and the fourth sequence indicates a fourth time-frequency resource on which the second network device adjusts phase distribution associated with the weight indication sequence, wherein
the weight indication sequence comprises the device identifier subsequence and one or more weight indication subsequences, the fourth sequence comprises the device identifier subsequence and one or more second resource indication subsequences, the device identifier subsequence is associated with the identification information of the second network device, the weight indication subsequence is associated with weight information, and the second resource indication subsequence is associated with at least one of a predefined time domain resource and a predefined frequency domain resource.

18. The method according to claim 17, wherein
the weight indication sequence and the fourth sequence are located in a same sequence, and the fourth sequence comprises the device identifier subsequence, the weight indication subsequence, and the second resource indication subsequence.

19. The method according to any one of claims 12 to 18, wherein the method further comprises:
any sequence between the first network device and the second network device is associated with the identification information of the second network device.

20. The method according to any one of claims 12 to 19, wherein the method further comprises:
sending a fifth sequence to the second network device, wherein the fifth sequence indicates first identification information allocated by the first network device to the second network device.

21. The method according to claim 20, wherein
one or more of the following are associated with the first identification information: the third sequence, the fourth sequence, the weight indication sequence, or the device identifier subsequence.

22. The method according to any one of claims 12 to 21, wherein the method further comprises:

a correlation between any two sequences of each sequence type is less than a first preset threshold; or each sequence type comprises a plurality of subsequences, and between any two sequences of a same type, a correlation between at least one pair of subsequences with a same start position and a same length is less than a second preset threshold.

23. A communication apparatus, comprising:

a transceiver module, configured to receive a first sequence from a first network device, wherein the first sequence is associated with identification information of a second network device, and the first sequence is used for downlink synchronization, wherein
the transceiver module is further configured to send a second sequence to the first network device, wherein the second sequence is associated with the identification information of the second network device; and
the transceiver module is further configured to receive a timing indication sequence from the first network device, wherein the timing indication sequence indicates a timing advance, and the timing advance is determined by the first network device based on the second sequence.

24. A communication apparatus, comprising:

a transceiver module, configured to send a first sequence to a second network device, wherein the first sequence is associated with identification information of the second network device, and the first sequence is used for downlink synchronization, wherein
the transceiver module is further configured to receive a second sequence from the second network device, wherein the second sequence is associated with the identification information of the second network device; and
the transceiver module is further configured to send a timing indication sequence to the second network device, wherein the timing indication sequence indicates a timing advance, and the timing advance is determined by the first network device based on the second sequence.

25. A communication apparatus, wherein the communication apparatus comprises a processor, and the processor is configured to cause, by running a computer program or instructions or by using a logic circuit, the communication apparatus to perform the communication method according to any one of claims 1 to 11 or perform the communication method according to any one of claims 12 to 22.

26. A computer-readable storage medium, wherein the computer-readable storage medium stores computer instructions or a program, and when the computer instructions or the program is run on a computer, the communication method according to any one of claims 1 to 11 is caused, or the communication apparatus performs the communication method according to any one of claims 12 to 22.

27. A computer program product, wherein the computer program product comprises computer instructions; and when a part or all of the computer instructions are run, the communication method according to any one of claims 1 to 11 or the communication method according to any one of claims 12 to 22 is performed.

| Terminal device | | First network device |
|---|---|---|
| | S101: Send a message 1 (random access preamble) → | |
| | S102: Send a message 2 (random access response) ← | |
| | S103: Send a message 3 (scheduled transmission) → | |
| | S104: Send a message 4 (contention resolution) ← | |

FIG. 1

First network
device

Second network
device

×

√

×

×

First network
device

FIG. 2

First network device

Second network device

Terminal device

FIG. 3

40

Processor 401

CPU 0

CPU 1

Processor 407

CPU 0

CPU 1

Communication bus 402

Memory 403

Communication interface 404

Output device 405

Input device 406

FIG. 4

First network device

Second network device

S501: Send a first sequence

S502: Send a second sequence

S503: Send a timing indication sequence

FIG. 5

```
┌─────────────────────────┐                    ┌─────────────────────────┐
│   First network device  │                    │  Second network device  │
└─────────────────────────┘                    └─────────────────────────┘
```

S501a: Generate a first sequence based on identification information of the second network device

S501: Send the first sequence

S501b: Identity differentiation and downlink synchronization

S502a: Send a third sequence

S502b: Generate a second sequence based on the identification information of the second network device

S502: Send the second sequence

S503: Send a timing indication sequence

S504: Send a timing feedback sequence

S504a: Identity differentiation and uplink synchronization

S505: Send a weight indication sequence and a fourth sequence

**FIG. 6**

Identification information of a second network device

→ Map the identification information of the second network device to a sequence index i whose length is N

→ An $i^{th}$ sequence is used for identity differentiation and synchronization

A sequence pool includes a plurality of sequences, each sequence may be denoted as an N*1 matrix, and the sequence index i corresponds to an $i^{th}$ sequence in the sequence pool

**FIG. 7**

| First network device | | Second network device |
|---|---|---|

S501a: Generate a first sequence based on identification information of the second network device

S501: Send the first sequence →

S501b: Identity differentiation and downlink synchronization

S501c: Send a fifth sequence →

S502a: Send a third sequence →

S502b: Generate a second sequence based on the identification information of the second network device

← S502: Send the second sequence

S503: Send a timing indication sequence →

← S504: Send a timing feedback sequence

S504a: Identity differentiation and uplink synchronization

S505: Send a weight indication sequence and a fourth sequence →

FIG. 8

The weight index i takes effect

Weight index i   Weight index j

FIG. 9

Second network device

Processing module 1001

Transceiver module 1002

100

**FIG. 10**

First network device

Processing module 1101

Transceiver module 1102

110

**FIG. 11**

Communication apparatus 120

Processor 1201

Instructions

Memory 1203

Instructions

Transceiver 1202

Radio frequency circuit

Antenna

**FIG. 12**

## INTERNATIONAL SEARCH REPORT

| International application No. |
|---|
| **PCT/CN2024/106206** |

**A. CLASSIFICATION OF SUBJECT MATTER**

H04W 74/08(2024.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, DWPI: 同步, 下行, 定时提前量, 接入, 可配置, 可重构, 平面, 表面, 序列, 标识, 关联, synchron+, downlink, TA, access, reconfigurable, intelligent, surface, IRS, RIS, SN, ID

**C. DOCUMENTS CONSIDERED TO BE RELEVANT**

| Category* | Citation of document, with indication, where appropriate, of the relevant passages | Relevant to claim No. |
|---|---|---|
| A | CN 112468252 A (BEIJING UNIVERSITY OF POSTS AND TELECOMMUNICATIONS) 09 March 2021 (2021-03-09) description, paragraphs 55-145 | 1-27 |
| A | CN 114915370 A (VIVO COMMUNICATION TECHNOLOGY CO., LTD.) 16 August 2022 (2022-08-16) entire document | 1-27 |
| A | US 2022416869 A1 (QUALCOMM INC.) 29 December 2022 (2022-12-29) entire document | 1-27 |
| A | WO 2022261921 A1 (QUALCOMM INC.) 22 December 2022 (2022-12-22) entire document | 1-27 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 October 2024** | **17 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

| | | | International application No. |
|---|---|---|---|
| | | | **PCT/CN2024/106206** |

| Patent document cited in search report | | | Publication date (day/month/year) | Patent family member(s) | | | Publication date (day/month/year) |
|---|---|---|---|---|---|---|---|
| CN | 112468252 | A | 09 March 2021 | None | | | |
| CN | 114915370 | A | 16 August 2022 | WO | 2022171078 | A | 18 August 2022 |
| US | 2022416869 | A1 | 29 December 2022 | US | 2023115007 | A1 | 13 April 2023 |
| WO | 2022261921 | A1 | 22 December 2022 | EP | 4356638 | A1 | 24 April 2024 |
| | | | | US | 2024205852 | A1 | 20 June 2024 |
| | | | | CN | 117480803 | A | 30 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310954541